# DEMANDE DE BREVET EUROPEEN

(11) **EP 0 889 385 A1**
(43) Date de publication de la demande: **07.01.1999**
(21) Numéro de dépôt: 98401617.0
(22) Date de dépôt: 29.06.1998
(51) Int. Cl.: G06F 1/00, G06F 9/46

(54) **Procédé et système de contrôle de l'utilisation d'un logiciel**

(30) Priorité: 30.06.1997 FR 9708210
(71) Demandeur: Actikey, 77300 Fontainebleau (FR)
(72) Inventeur:
(74) Mandataire: Benech, Frédéric

(57) **Abrégé**

Il s'agit d'un procédé et d'un système de contrôle de l'utilisation d'un logiciel développé sous une plate-forme déterminée, associé à un dispositif, dans lequel on traite dans le dispositif et/ou on renvoie à partir du dispositif des signaux à l'ordinateur en réponse à des signaux émis à partir de ce dernier. On écrit et on lit dans le circuit du dispositif en faisant appel à une fonction intégrée dans un fichier objet (.OBJ) ou un fichier de Librairie Dynamique (.DLL), la fonction ayant la forme suivante : résultat = cnmr(var1, var2, ... varn) avec n > 3. La fonction est agencée pour détecter automatiquement le type de plate-forme déterminée, et calculer le contexte d'exécution du logiciel en fonction de la plate-forme.

## Description

La présente invention concerne un procédé de contrôle de l'utilisation d'un logiciel fonctionnant sous une plate-forme déterminée, associé à un dispositif muni d'un circuit électronique à mémoire rémanente à lecture/écriture, connecté aux bornes d'un port parallèle entre un ordinateur et un appareil périphérique, dans lequel on traite dans le dispositif et/ou on renvoie à partir dudit dispositif des signaux à l'ordinateur en réponse à des signaux émis à partir de ce dernier.

Par plate-forme on entend un environnement correspondant à un système d'exploitation déterminé, tel que l'environnement Windows™, l'environnement Unix™, ou d'autres environnements (Apple™, par exemple), faisant notamment appel à des bibliothèques de liens dynamiques (DLL, initiales de Dynamic Lien Librairy en langage anglo-saxon).

On sait que les bibliothèques de liens dynamiques (DLL) constituent un utilitaire important au sein des systèmes d'exploitation. Les DLL offrent la possibilité de connecter des modulés préécrits dans le système d'exploitation. Cela permet aux applications de partager le codage commun, de modulariser les fonctions couramment utilisées et d'assurer une certaine extensibilité.

La présente invention concerne également un système de contrôle interactif de l'utilisation de logiciels.

Elle trouve une application particulièrement importante bien que non exclusive dans le domaine de la protection contre la copie de logiciels utilisée sur des micro-ordinateurs sous plate-forme Windows™ 16 et 32 bits.

On connaît déjà des méthodes de protection de logiciels stockées par exemple sur disquettes permettant d'éviter la copie de ces dernières.

La première méthode de protection consiste à court-circuiter la partie de programme du micro-ordinateur qui lit les disquettes.

Une deuxième méthode consiste à marquer la disquette de manière irréversible en détruisant un endroit particulier du support magnétique avec un rayon laser.

Les deux méthodes mentionnées ci-dessus présentent des inconvénients notamment parce qu'elles empêchent l'utilisateur de faire une copie de sauvegarde de ses programmes.

Une troisième méthode consiste à marquer l'ordinateur au moyen d'un dispositif électronique, parfois appelé clé.

Le programme, au cours de son exécution, va alors vérifier la présence de cette clé constituée par un circuit électronique qui renvoie des codes lorsqu'il est sollicité.

Ce circuit peut se loger directement dans l'un des connecteurs d'extension de l'ordinateur, ou plus simplement se brancher sur l'une des prises ou ports externes, par exemple celle de l'imprimante sans pour autant perturber le fonctionnement de cette dernière.

On peut ainsi copier le logiciel à volonté. Ce système qui a été encore amélioré en rendant les clés directement programmables grâce à une mémoire rémanente à lecture/écriture est de loin le plus efficace.

Il présente cependant un certain nombre d'inconvénients.

En effet, dans les logiciels qui fonctionnent actuellement sur une plate-forme déterminée, et plus particulièrement ceux qui fonctionnent sur plate-forme Windows™ (16 et 32 bits), se posent des problèmes de compatibilité des systèmes utilisés lors de la programmation par le programmeur de la clé en fonction des langages et/ou générations de logiciels qu'il utilise.

La présente invention vise à fournir un procédé et un système de contrôle du fonctionnement d'un logiciel répondant mieux que ceux antérieurement connus aux exigences de la pratique, notamment en ce qu'elle permet de palier les inconvénients ci-dessus mentionnés, et en ce qu'elle permet par des procédures d'installation simplifiées de ne plus se préoccuper de la plate-forme finale sur laquelle fonctionnera l'application.

Avec ladite invention, le programmeur va donc autoriser ou non le fonctionnement du logiciel protégé de façon optimisée, ce qui présente un résultat technique particulièrement avantageux , à une époque où le piratage de logiciels est malheureusement en recrudescence.

Dans ce but, l'invention propose notamment un procédé de contrôle de l'utilisation d'un logiciel développé sous une plate-forme déterminée, associé à un dispositif muni d'un circuit électronique à mémoire rémanente à lecture/écriture, connecté aux bornes d'un port parallèle entre un ordinateur et un appareil périphérique, dans lequel on traite dans le dispositif et/ou on renvoie à partir dudit dispositif des signaux à l'ordinateur en réponse à des signaux émis à partir de ce dernier, caractérisé en ce que on écrit et on lit dans le circuit du dispositif en faisant appel à une fonction intégrée dans un fichier objet (.OBJ) ou un fichier de Librairie Dynamique (.DLL) préalablement inséré dans ledit logiciel, ladite fonction ayant la forme suivante :
Résultat = cnrm(var1, var2, ... varn) avec n > 3
dans laquelle varl à varn correspondent à des valeurs particulières selon ce que l'on souhaite exécuter avec le dispositif et à au moins une valeur spécifique correspondant à un utilisateur déterminé,
ladite fonction étant agencée pour permettre de détecter automatiquement le type de plate-forme déterminée, et calculer le contexte d'exécution du logiciel en fonction de ladite plate-forme.

Après appel, varl à varn contiennent des valeurs résultats dépendant de l'action exécutée donc des valeurs données lors de l'appel. Résultat contiendra la valeur de varl après appel.

Plus précisément l'interface logicielle permettant de lire et d'écrire dans la clé se présente sous les formes suivantes :
- un fichier objet (.OBJ) à utiliser pour les programmes écrits dans les langages compilés comme le C ou le Pascal, pour lequel l'appel est conforme à ce qui est décrit ci-dessus, ou
- une librairie dynamique (.DLL) à utiliser par les programmes écrits dans les langages interprétés ou semi-compilés (VISUAL BASIC, WINDEV), mais aussi dans certains cas avec des langages compilés.

Avantageusement, lors de la mise en oeuvre de la fonction de liaison (Login) entre le logiciel et le dispositif, on identifie la clé et/ou sa position par l'intermédiaire d'une valeur spécifique (cfgFun et/ou cfgKey), par exemple donnée par le logiciel, ou obtenue ou explorant les clés successives, et on mémorise cette valeur spécifique qu'on utilise ensuite comme constante lors du fonctionnement dudit logiciel.

Dans un mode de réalisation avantageux la fonction cnrm est agencée (fonction cnrmcb) pour rappeler au moins une fois le logiciel en cours de fonctionnement de façon à vérifier que c'est bien la fonction cnrm d'origine qui a été appelée.

Par fonction cnrm d'origine on entend celle qui a été conçue et prévue pour fonctionner d'origine avec le dispositif, par le constructeur du dispositif.

Dans un mode de réalisation avantageux, la plate-forme déterminée est une plate-forme Windows™, ladite fonction cnrm étant agencée pour permettre de reconnaître automatiquement le type de passage de paramètres par référence ou par valeur mis en oeuvre dans le logiciel.

Rappelons que dans ce cas , en raison de la nature de certains langages de programmation, la librairie dynamique est en réalité construite sous la forme de deux librairies dynamiques :
- une librairie dynamique avec passage des paramètres par référence pour lequel l'appel est conforme à ce qui est décrit ci-dessus, c'est-à-dire pour lequel Résultat contient la valeur varl après appel (soit un premier fichier DLL pour application 16 bits, et un deuxième fichier DLL pour application 32 bits),
- une librairie dynamique avec passage des paramètres par valeur pour laquelle un paramètre supplémentaire permet de définir quelle valeur de varl à varn est à mettre dans Résultat après appel. (soit un troisième fichier DLL pour les applications 16 bits et un quatrième fichier DLL pour les applications 32 bits).

Antérieurement à l'invention, lors d'un fonctionnement sous le système d'exploitation WINDOWS NT d'une application 16 bits (écrite pour WINDOWS 3.xx), des mécanismes supplémentaires étaient nécessaires.

Le programmeur était en effet obligé d'utiliser une librairie dynamique même pour un langage compilé, ceci afin de pouvoir remplacer le premier fichier DLL par un cinquième fichier DLL spécifique à l'environnement WINDOWS NT. Ce cinquième fichier DLL spécifique appelait alors lui-même un sixième fichier DLL 32 bits spécifique à WINDOWS NT qui à son tour appelait le module d'interface périphérique/unité centrale(driver en langage anglo-saxon) chargé des entrées/sorties vers la clé.

Il fallait utiliser le même type de mécanisme pour le troisième fichier DLL en cas de passage des paramètres par référence.

Pour résumer les cas de figures suivants existaient sous plate-forme Windows™ avant l'invention:

Avec une application 16 bits avec programmes compilés, lors de l'utilisation de la librairie .OBJ le fonctionnement s'effectuait exclusivement sous WINDOWS 16 bits.

Lors de l'utilisation du premier fichier DLL (version WINDOWS 16 bits) il fallait par contre remplacer ce premier fichier DLL par une version spéciale NT, prévoir un sixième fichier DLL spécial pour WINDOWS NT et installer le driver NT.

Avec une application 16 bits avec programmes semi-compilés ou interprétés, si l'application permettait le passage de paramètres par références, lors de l'utilisation du premier fichier DLL (version WINDOWS 16 bits) pour fonctionner sous WINDOWS NT il fallait remplacer ce premier fichier DLL par une version spéciale NT, prévoir un cinquième fichier spécial pour WINDOWS NT et installer le driver NT.

Mais si l'application ne permettait pas le passage de paramètres par références lors de l'utilisation du troisième fichier DLL (version WINDOWS 16 bits) pour fonctionner sous WINDOWS NT il fallait remplacer ce troisième fichier DLL par une version spéciale NT, prévoir une autre DLL spéciale pour WINDOWS NT et installer le driver NT.

Avec une application 32 bits avec programmes compilés, lors de l'utilisation de la librairie .OBJ, le fonctionnement s'effectuait par contre exclusivement sous WINDOWS 32 bits (WINDOWS 95 ou WIN32S). Le fonctionnement ne s'effectuait pas sous NT, cas dans lequel il faut un .OBJ spécifique donc deux programmes différents pour le 32 bits.

Lors de l'utilisation du deuxième fichier DLL (version WINDOWS 32 bits) pour fonctionner sous WINDOWS NT il fallait par contre remplacer ce deuxième fichier DLL par une version spéciale NT et installer le driver NT.

Enfin avec une application 32 bits avec programmes semi-compilés ou interprétés, si l'application permettait le passage de paramètres par références, lors de l'utilisation du deuxième fichier DLL (version WINDOWS 32 bits) pour fonctionner sous WINDOWS NT il fallait remplacer ici encore ce deuxième fichier DLL par une version spéciale NT et installer le driver NT.

Par contre si l'application ne permettait pas le passage de paramètres par références, lors de l'utilisation du quatrième fichier DLL (version WINDOWS 32 bits) pour fonctionner sous WINDOWS NT il fallait remplacer ce quatrième fichier DLL par une version spéciale NT et installer obligatoirement le driver NT.

De tels procédés présentent donc des inconvénients.

En effet le nombre de DLL et la différenciation des DLL selon la plate-forme d'exécution obligent les utilisateurs à prendre en compte tous les cas de figures et à avoir une procédure d'installation complexe.

Les programmes compilés sont amenés à utiliser obligatoirement une DLL pour être portables sur NT sans compilation.

La compréhension des différents cas possibles n'est donc pas évidente et conduisait les programmeurs à faire des erreurs, ce qui augmentait les coûts d'intervention lors de l'installation et l'utilisation des logiciels et entraînait de ce fait des effets techniques non satisfaisants.

La plate-forme déterminée étant une plate-forme Windows, et/ou ladite fonction cnrm étant agencée pour permettre de reconnaître automatiquement le type de passage de paramètres par référence ou par valeur mis en oeuvre dans le logiciel, ces divers inconvénients sont palliés.

De façon classique, avant toute manipulation de clé, on sait qu'on effectue une opération dite ci-après Login.

Le login est en effet une action nécessaire afin d'être sûr de lire et d'écrire dans la bonne clé. Selon un mode de réalisation de l'invention, à chaque appel de cnrm, on va ainsi et par exemple passer les codes éditeurs dans les variables var2, var3 pour valider la bonne clé.

Lors du login clé, on alloue alors une zone mémoire (pile) associée au login, dans laquelle seront stockées les valeurs de retour de varl à varn et aussi les éléments du contexte d'exécution spécifique à la plate-forme.

Pour permettre la reconnaissance et le passage automatique de paramètres par référence et par valeur, l'appel de la fonction cnrm est complété par une fonction cnrmvar dont l'objectif est de récupérer le contenu après appel de varl à varn.

Sa forme est la suivante :
Résultat = cnrmvar(handle de login, numéro de variable(1 à n))

Son utilisation se fera en lieu et place de la variable correspondante.

Par exemple, dans un mode avantageux de l'invention ou la valeur n est égale à 8, au lieu d'utiliser une méthode du type :

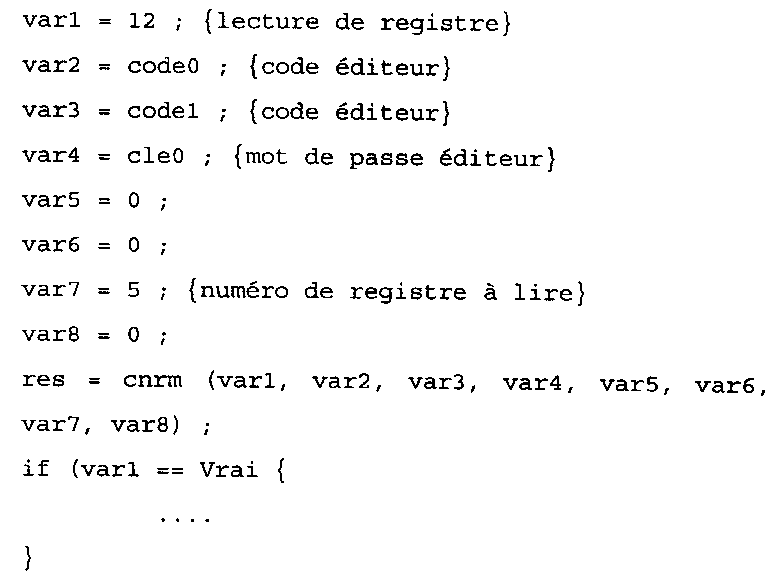

On prévoit une affectation comme suit :

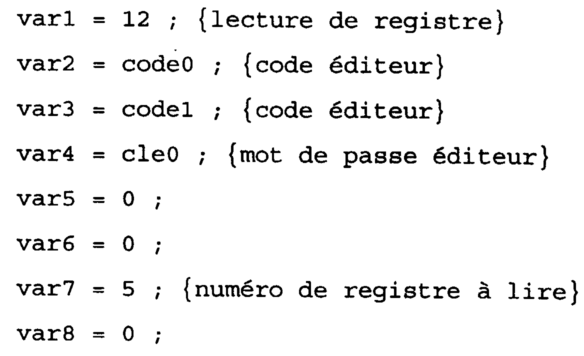

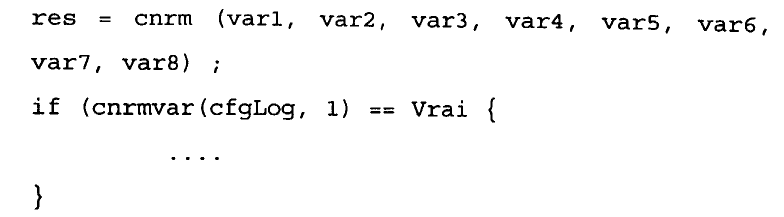

Au moment de l'appel, la fonction cnrm va analyser le contenu de la pile. Si elle trouve les codes éditeurs dans la pile alors elle saura que c'est un passage par valeur, sinon c'est un passage par référence.

A noter que ce mécanisme nécessite que les interfaces logiciels soient personnalisés par éditeur, que chaque interface par éditeur soit capable de reconnaître les codes éditeurs dans la pile, et que chaque éditeur possède des codes différents, ce qui est prévu et mis en oeuvre par le fabricant des clés.

De cette manière, le programmeur n'a plus du tout à se soucier du mode de passage des paramètres, et peut choisir le mode qu'il souhaite quand il le souhaite. Lors de l'utilisation de programmes semi-compilés mettant en oeuvre uniquement des passages de paramètres par valeur, il aura un fonctionnement et un principe d'écriture identique à celui d'un programme compilé avec passage de paramètres par référence.

L'appel à la fonction cnrm s'en trouve uniformisé et les appels peuvent se faire de la même manière quel que soit le langage.

Dans un mode de réalisation avantageux on ne met en place le contexte d'exécution qu'une seule fois, lors de la première mise en oeuvre de la fonction de liaison entre le logiciel et le dispositif (login d'entrée).

Ceci procure ainsi le maximum de performance pour les autres appels de la fonction cnrm.

Avantageusement le procédé comprend de plus la mise en oeuvre d'une méthode de protection dans laquelle on choisit quelques fonctions sensibles du logiciel à protéger, on masque le point d'entrée de ces fonctions par un appel indirect, et on crypte la structure qui contient le point d'entrée desdites fonctions.

Ainsi, on garantit que la clé a bien été lue sinon le décryptage ne se fait pas, les points d'entrée des fonctions n'étant pas trouvés.

En d'autres termes, si un utilisateur normal ayant une licence ne met pas sa clé, il aura le message « clé absente » .

Si un pirate tente de remplacer la clé ou de supprimer le test de présence de la clé, le décryptage ne se fait pas, et dans ce cas les points d'entrée des fonctions ne sont pas trouvés.

Le cryptage est avantageusement assuré par un programme externe après compilation et édition de liens. Il peut par exemple utiliser une chaîne dite REPERE1 qui doit être unique pour trouver la zone à crypter et la longueur de ladite zone. De façon plus générale, l'outil de cryptage sera adapté par le programmeur en fonction de ses besoins spécifiques.

L'invention concerne aussi un système mettant en oeuvre le procédé décrit ci-dessus.

Elle concerne également un système de contrôle de l'utilisation d'un logiciel développé sous une plate-forme déterminée, comprenant un dispositif muni d'un circuit électronique à mémoire rémanente à lecture/écriture, connectable aux bornes d'un port parallèle entre un ordinateur et un appareil périphérique, agencé pour traiter et/ou renvoyer des signaux à l'ordinateur en réponse à des signaux émis à partir de ce dernier, caractérisé en ce que le système comprend des moyens d'écriture et de lecture dans le circuit du dispositif en faisant appel à une fonction intégrée dans un fichier objet (.OBJ) ou un fichier de Librairie Dynamique (.DLL) préalablement inséré dans ledit logiciel, ladite fonction ayant la forme suivante :
résultat = cnrm(var1, var2, ... var8)
dans laquelle varl à var8 correspondent à des valeurs particulières selon ce que l'on souhaite exécuter avec le dispositif et à au moins une valeur spécifique correspondant à un utilisateur déterminé, ladite fonction étant agencée pour permettre de détecter automatiquement le type de plate-forme déterminée, et de calculer le contexte d'exécution du logiciel en fonction de ladite plate-forme.

Avantageusement le système comprend de plus des moyens propres à reconnaître automatiquement le type de passage de paramètres par référence ou par valeur mis en oeuvre dans le logiciel.

L'invention sera mieux comprise à la lecture de la description des modes de réalisation donnés ci-après à titre d'exemple non limitatifs, en faisant notamment référence à différents tableaux.

La description se réfère également aux dessins qui l'accompagnent, dans lesquels :
- La figure 1 est une vue en perspective, schématique, d'un micro-ordinateur équipé d'un dispositif selon l'invention branché sur le port parallèle de connexion avec l'imprimante.
- La figure 2 est un schéma bloc général d'un dispositif électronique appartenant au système selon l'invention.
- Les figures 3 et 4 montrent un organigramme donnant les étapes de fonctionnement du système et du procédé de contrôle selon le mode de réalisation de l'invention plus particulièrement décrit ici.
- La figure 5 est un organigramme d'un procédé de cryptage utilisé dans un mode de réalisation de l'invention.

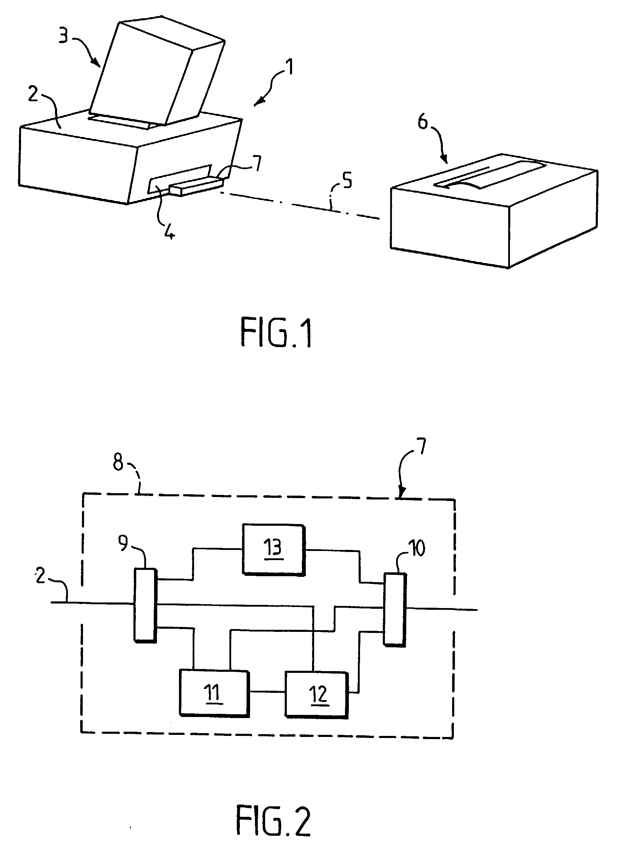

La figure 1 montre un micro-ordinateur 1 comportant un boîtier 2 et un écran 3.

Le boîtier est muni d'une prise 4 à port parallèle de connexion via un câble 5 avec un appareil périphérique qui en l'espèce est une imprimante 6.

Le micro-ordinateur 1 qui est programmé avec un logiciel protégé est muni sur son port parallèle d'un dispositif 7 correspondant audit logiciel protégé, en forme de connecteur double, branchables sur le port parallèle de l'ordinateur d'un côté et sur un autre boîtier de dispositif ou le câble de l'imprimante 5 de l'autre côté.

Plus précisément, en référence à la figure 2, le dispositif selon le mode de réalisation de l'invention plus particulièrement décrit ici 7 comprend un boîtier 8 muni de deux prises 9 et 10 de branchement pour port parallèle connues en elles-mêmes, de type normalisé à 25 branches ("pins" en langage anglo-saxon) du côté du micro-ordinateur et d'un type femelle correspondant du côté imprimante.

Le dispositif 7 selon l'invention comporte connecté à la prise mâle 9 reliée au micro-ordinateur 2 un circuit 11, lui-même raccordé d'une part à la prise femelle 10 et d'autre part au circuit automate de gestion 12.

Le dispositif 7 est par exemple du type décrit dans le document 2.740.236 incorporé ici par référence, et qui ne sera donc pas détaillé plus avant.

Dans le cadre des modes de réalisation de l'invention plus particulièrement décrits ici, on a envisagé ci-après le cas des plates-formes Windows™ (16 et 32 bits).

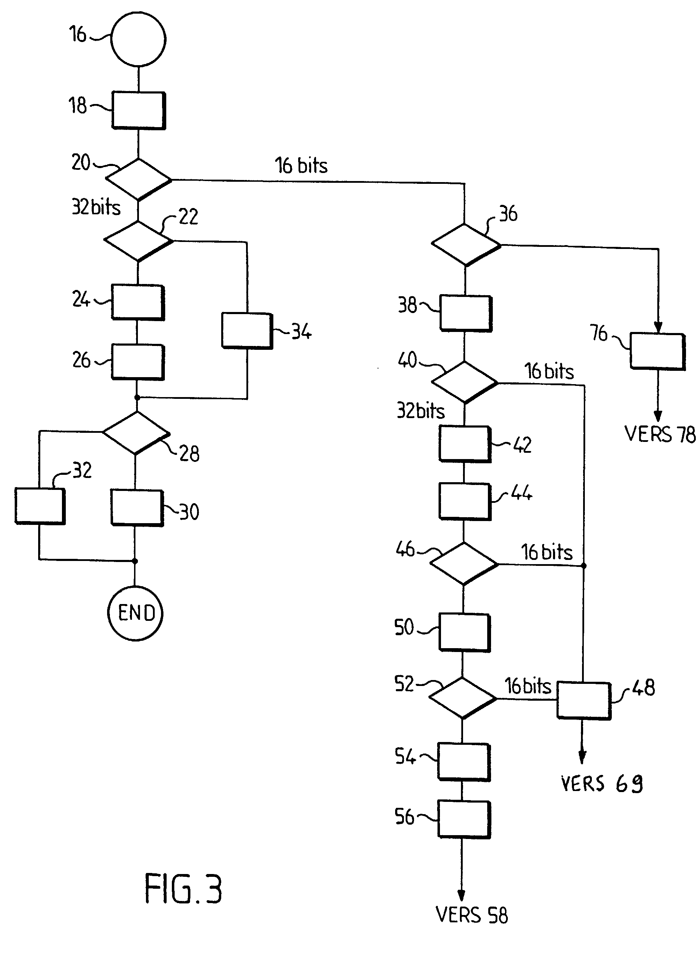

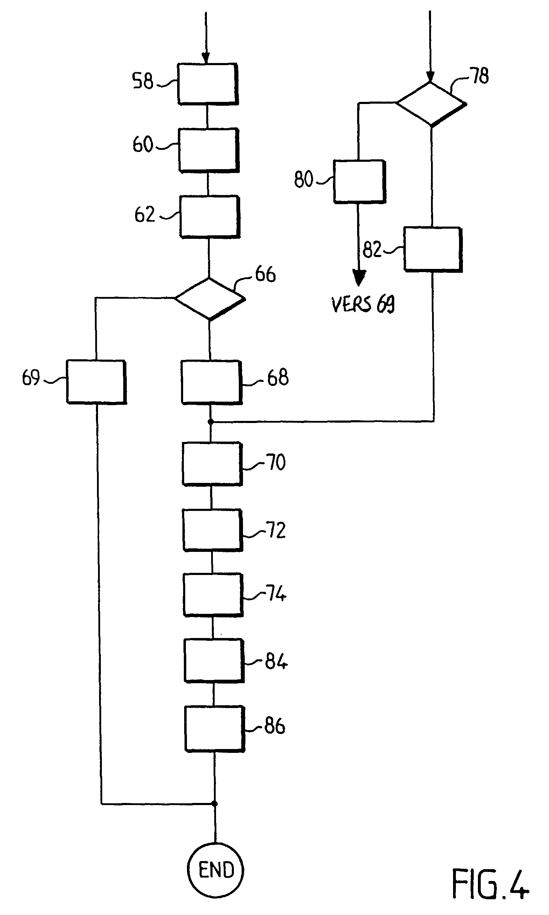

Le passage par valeur et par référence ayant dors et déjà été décrit ci-avant, on va maintenant préciser la mise en place du contexte d'exécution selon la plate-forme Windows™ en faisant notamment référence aux figures 3 et 4.

Dans la suite, les bibliothèques et programmes utilisés font donc en particulier référence à ceux de la Société américaine Microsoft. Ils peuvent être consultés plus avant dans des guides du type et par exemple la « Bible des API » ou « Windows 95, Win32 programmation des API - Secrets d'experts » publiés par Simon & Schuster Macmillan.

Ainsi des API tel que getVersion, ou des DLL tels que GetProcAdress32W, vont pouvoir être mis en oeuvre sans explication complémentaire.

Un mode de réalisation de l'algorithme de calcul et gestion du contexte selon le mode de réalisation de l'invention plus particulièrement décrit ici va maintenant être détaillé, la zone mémoire lors du login contenant les informations du contexte.

Rappelons que lors du login de la clé, cnrm va automatiquement faire une reconnaissance de la plate-forme et mettre en place le contexte d'exécution adéquat. Ce contexte n'est avantageusement calculé qu'une seule fois.

Pour ce faire, après mise en route de l'ordinateur (étape 16) et chargement du logiciel protégé avec mise en place de la clé (étape 18), cnrm va identifier (étape 20) si l'environnement est 16 ou 32 bits). Pour ce faire, la zone mémoire allouée lors du Login contient les informations du contexte.

On va maintenant détailler le fonctionnement 32 bits.

Si l'environnement est 32 bits

Lors du login (test 22) :
- Recherche de plate-forme par l'API getVersion (étape 24)
- Mémorisation du fait d'être sous NT ou non (étape 26)
- Selon la plate-forme (test 28) on appelle les routines internes de cnrm pour le dialogue avec la clé (étape 30), ou on appelle le driver cnrm pour WINDOWS NT (étape 32)

Lors des autres appels (étape 34) :
- Selon la plate-forme (test 28), on appelle les routines internes de cnrm pour le dialogue avec la clé (étape30) , ou on appelle le driver cnrm pour WINDOWS NT (étape32)

Si l'environnement est 16 bits

Lors du login (test 36) :
- Recherche de plate-forme par l'API getVersion (étape 38)
- Si la version est <=3.10 (test 40) on est sûr de ne pas être sous WINDOWS NT donc le fonctionnement en 16 bits peut continuer normalement (étape 48), c'est-à-dire appeler les routines internes de la fonction cnrm (voir ci-après étape 69)
- Si la version est >3.10 alors on est sous une version 16 ou 32 bits

On va alors retrouver la version en se plaçant en mode 32 bits (étape 42)
- Chargement de la librairie dynamique KRNL386.DLL (16 bits) (étape 44)
- Si le chargement échoue (test 46), on est sûr d'être sur une plate-forme 16 bits (étape 48)
- Si le chargement n'échoue pas
   on va charger dynamiquement (étape 50) les fonctions
   - GetProcAddress32W
   - LoadLibraryEX32W
   - CallProc32W
   - FreeLibrary32W

Si l'une de ces fonctions n'existe pas (Echec du Chargement) (test 52) on est sûr d'être sur une plate-forme 16 bits seulement (48).

Sinon, on est sur une plate-forme 32 bits, on va charger dynamiquement (étape 54) la DLL KERNEL32.DLL grâce à LoadLibrary32W chargé précédemment.

On va charger dynamiquement (étape 56) la fonction GetVersion (32 bits) du module KERNEL32.DLL grâce à la fonction getProcAddress32W chargée précédemment.

GetVersion (32 bits) est appelée (étape 58) par l'intermédiaire de callProc32W chargée précédemment, on obtient ainsi (étape 60) le numéro de version de la plate-forme 32 BITS sur laquelle on se trouve.

Ce numéro de version nous permet de savoir si on est sur NT ou non.
- Mémorisation du fait d'être sous NT ou non (étape 62)
- Selon la plate-forme (test 66), on appelle les routines internes de cnrm (étape 69) pour le dialogue avec la clé, ou on appelle le driver CNRM (étape 68) pour WINDOWS NT de la manière suivante :

On va charger dynamiquement (étape 70) les fonctions (on est sûr qu'elles sont là dans KRNL386.DLL car on les a déjà chargées lors du Login) :
GetProcAddress32W
LoadLibraryEX32W
CallProc32W
FreeLibrary32W
GetVDMPointer32W (fonction permettant de convertir des adresses du monde 16 bits vers le monde 32 bits)

On va charger alors les fonctions de KERNEL32.DLL suivantes (étape 72) (par l'intermédiaire de LoadLibraryEX32W et GetProcAddress32W) :
CreateFileW
DeviceIoControl
CloseHandle
afin de pouvoir appeler directement (étape 74) le driver NT en mode 32 bits.

Lors des autres appels (test 36, étape 76)

Selon la plate-forme (test 78), on appelle (étape 80) les routines internes de cnrm pour le dialogue avec la clé (étape 69), ou on appelle le driver CNRM (étape 82) pour WINDOWS NT de la manière suivante :

On va charger dynamiquement (étape 70) les fonctions (on est sûr qu'elles sont là dans le KNRL386.DLL car on les a déjà chargées) :
GetProcAddress32W
LoadLibraryEX32W
CallProc32W
FreeLibrary32W
GetVDMPointer32W (fonction permettant de convertir une adresse du monde 16 bits vers le monde 32 bits)

On va charger alors dynamiquement (étape 72) les fonctions de KERNEL32.DLL suivantes (par l'intermédiaire de LoadLibraryEX32W et GetprocAddress32W) :
CreateFileW
DeviceIoControl
CloseHandle
afin de pouvoir appeler directement (étape 74) le driver NT en mode 32 bits.

On convertit alors, comme lors du Login, ce qui n'avait pas été décrit jusqu'alors, tous les pointers 16 bits en 32 bits par GetVDMPointer32 (étape 84).

On appelle le driver (étape 86) par appel des fonctions CreateFileW, DeviceIoControl et CloseHandle par l'intermédiaire de la fonction CallProc32W.

On va maintenant décrire plus précisément la fonction cnrm.

Cnrm permet de réaliser de nombreuses actions vis à vis de la clé. Toutes ces actions (nommées aussi fonctions par la suite) sont accessibles à travers une fonction unique appelée « cnrm » de la forme générale :
entier cnrm (référence var1, référence var2, référence var3, référence var4, référence var5, référence var6, référence var7, référence var8)

En cas d'utilisation du langage C, on aura par exemple :
Déclaration en C : Int cnrm (int *var1, int *var2, int *var3, int *var4, int *var5, int *var6, int *var7, int *var8);

En cas d'utilisation du Pascal, il vient : Déclaration en Pascal : Fonction cnrm(var var1, var2, var3, var4, var5, var6, var7, var8 : integer) : integer;

On notera selon les langages, qu'il peut être nécessaire de qualifier plus précisément ces prototypes, par exemples sous Windows on utilisera WINAPI.

Ces éléments sont à la portée de l'homme du métier.

Les actions sont par ailleurs regroupées en différentes catégories selon le mode de réalisation ci-après donné à titre d'exemple :

Les actions locales pures
Fonction 00 : Test de présence clé sur la machine locale
Fonction 01 : Initialisation du mot de passe de la clé s'il n'est pas initialisé

Les actions de Login et Logout :
Fonction 02 : Login sur une clé particulière ou sur la première trouvée
Fonction 03 : Logout sur une clé pour laquelle un login a été fait

Toutes les autres actions ne peuvent être exécutées que si un Login a été réussi et jusqu'au Logout correspondant.

Les actions de verrouillage de registres de la clé :
Fonction 04 : Ecriture du registre de protection (défini des registres protégés en écriture)
Fonction 05 : Lecture du registre de protection (Lecture du nombre de registres protégés)

Les actions de lecture et d'écriture dans des registres de la clé :
Fonction 06 : Ecriture d'un Buffer Far dans la clé
Fonction 07 : Lecture dans un Buffer Far du contenu de la clé
Fonction 08 : Ecriture d'un Buffer near dans la clé
Fonction 09 : Lecture dans un Buffer near du contenu de la clé
Fonction 10 : Ecriture de deux entiers dans deux registres consécutifs
Fonction 11 : Lecture de deux entiers dans deux registres consécutifs
Fonction 12 : Ecriture d'un entier dans un registre
Fonction 13 : Lecture d'un entier dans un registre
Fonction 14 : Ecriture d'un octet dans un registre
Fonction 15 : Lecture d'un octet dans un registre de 8 bits
Fonction 16 : Ecriture d'un bit dans un registre
Fonction 17 : Lecture d'un bit dans un registre
Fonction 18 : Ecriture d'une valeur à partir du registre X au registre Y
Fonction 19 : Incrémentation (+) ou décrémentation (-)
Fonction 20 : Rotation droite (+) ou gauche(-)
Fonction 21 : Décalage droite (+) ou gauche (-)
Fonction 22 : Ecriture d'une date
Fonction 23 : Lecture d'une date

Les actions de gestion de la clé de cryptage et cryptage/décryptage
Fonction 25 : Ecriture d'une clé de cryptage far
Fonction 26 : Lecture d'une clé de cryptage far
Fonction 27 : Ecriture d'une clé de cryptage near
Fonction 28 : Lecture d'une clé de cryptage near
Fonction 29 : Cryptage texte far selon clé de cryptage
Fonction 30 : Décryptage texte far selon clé de cryptage
Fonction 31 : Cryptage texte near selon clé de cryptage
Fonction 32 : Décryptage texte near selon clé de cryptage

Les actions de lecture et écriture d'informations système dans la clé
Fonction 24 : Lecture de la date de fabrication
Fonction 34 : Ecriture code utilisateur final
Fonction 35 : Lecture du code utilisateur final
Fonction 36 : Ecriture du code SSII
Fonction 37 : Lecture du code SSII
Fonction 38 : Réservation des registres destinés à une SSII
Fonction 39 : Lecture du nombre de registres destinés à une SSII
Fonction 40 : Ecriture du code multiprotection
Fonction 41 : Lecture du code multiprotection
Fonction 42 : Lecture du code distributeur national
Fonction 43 : Lecture du cheksum
Fonction 44 : Lecture du numéro de série

Les actions spécifiques aux clés sur un réseau Fonction 46 : Réseau: Ecriture du nombre maximum d'utilisateurs
Fonction 47 : Réseau: Lecture du nombre d'utilisateurs réseau

Les actions spécifiques aux clés à horloge
Fonction 50 : Initialisation de la date et de l'heure dans l'horloge
Fonction 51 : Lecture de la date et de l'heure clé avec horloge
Fonction 52 : Clé avec horloge avec écriture alarme
Fonction 53 : Clé avec horloge avec lecture alarme
Fonction 54 : Clé avec horloge avec lecture statut
Fonction 55 : Clé avec horloge-Ecriture RAM/HORLOGE
Fonction 56 : Clé avec horloge-Lecture RAM/HORLOGE

Les actions spécifiques aux clés à microprocesseur
Fonction 48 : Sauvegarde EEPROM vers microprocesseur
Fonction 49 : Initialisation EEPROM depuis le microprocesseur

Les fonctions 33 et 45 sont réservées dans l'exemple plus particulièrement décrit ici.

La fonction cnrm renvoie un entier (16 ou 32 bits selon que l'on est en environnement 16 ou 32 bits)

Elle reçoit toujours 8 paramètres var1 à var8 passés par référence (pointeurs) dont la valeur doit être initialisée avant appel, et dont la valeur après appel dépend de l'action demandée.

Avant appel, le contenu des variables var1 à var8 suit une convention qui est toujours la même.

Après appel, le contenu des variables dépend de l'action demandée, et suit toujours un modèle déterminé. La valeur renvoyée permet de savoir si l'action a réussi ou non, et en cas de succès varl prend une valeur appelée Vrai (la valeur de vrai est spécifique à chaque éditeur au même titre que les codes éditeurs)

Pour certaines actions (Fonction 0, Fonction 1 et Fonction 2 uniquement), on peut combiner, par addition, au contenu de varl une valeur appelée CfgFun qui définie une position particulière de la clé.

On a ainsi un format général et contenu des variables du type suivant :

Avant appel :
cfgLog = cnrm (référence var1, {Paramètre numéro d'action (fonction) [+ cfgFun]}
référence var2, {Code client 0 = code0 }
référence var3, {Code client 1 = code1}
référence var4, {Mot de passe (clé0) ou var4 reçu de l'action « LOGIN » }
référence var5, {paramètre spécifique à l'action souhaitée }
référence var6, {paramètre spécifique à l'action souhaitée }
référence var7, {paramètre spécifique à l'action souhaitée }
référence var8, {paramètre spécifique à l'action souhaitée } )

Pour les fonctions 0, 1 et 2, var4 doit contenir le mot de passe cle0 lors de l'appel de cnrm.

Pour toutes les autres fonctions, var4 doit contenir la valeur reçue dans var4 lors du login (Fonction 2).

Après appel :

Pour les fonctions 0 et 1 :
cfgLog : toujours 0
var1 : Vrai si l'action a réussie
Une autre valeur en cas d'échec

Pour toutes les autres fonctions :
cfgLog peut-être égal à 0. Dans ce cas var1 vaut 0 et var8 contient un code d'erreur
cfgLog peut être différent de 0. Dans ce cas varl contient une valeur qui peut-être
   0 : Un code d'erreur se trouve dans var8
   Vrai : L'action a réussie
   Autre valeur : Clé pas trouvée

Dans tous les cas :
var2 : Une valeur spécifique à l'action demandée (cfgKey pour fonctions 0, 1 et 2)
var3 : Une valeur spécifique à l'action demandée (cfgFun pour fonctions 0, 1 et 2)
var4 : Une valeur unique qui ne plus être modifiée par la suite (Identique à cfgLog)
var5 : Une valeur spécifique à l'action demandée
var6 : Une valeur spécifique à l'action demandée
var7 : Une valeur spécifique à l'action demandée
var8 : Adresse du port parallèle sur lequel la clé à été trouvée ou code d'erreur

La fonction de cfgKey est définie plus précisément ci-après, avec des valeurs prises en exemple de façon nullement limitative.

CfgKey est une valeur sur 16 bits qui permet de connaître la position de la clé dans le cas d'utilisation de plusieurs clés. Les bits forment alors des groupes avec les significations suivantes :
bits 0 à 3 : Nombre de registres éditeur dans la clé
   000 : Pas de clé
   001 : 32 registres
   010 : 96 registres
   011 : 224 registres
   100 : 480 registres
   101 : 992 registres
   110 : 2016 registres
   111 : 4064 registres
bit 4 :
   0 la clé est une clé multiprotection (Voie fonctions 40 et 41)
   1 la clé est une clé multiprotection
bit 5 :
   0 la clé ne contient pas de registre de protection (voir fonctions 4 et 5)
   1 la clé contient un registre de protection
bit 6 :
   0 la clé n'est pas une clé à horloge
   1 la clé est une clé à horloge
bit 7 : Indicateur de sortie des données (Ack ou PE)
bits 8 et 9 : Adresse du port parallèle ou numéro de serveur
   Pour une clé en local les valeurs sont :
      00 : Pas de clé
      01 : 03bch
      10 : 0378h
      11 : 0278h
   Pour une clé en réseau
      00 : Serveur numéro 0
      01 : Serveur numéro 1
      10 : Serveur numéro 2
      11 : Serveur numéro 3
bits 10 à 12 : Numéro de la clé pour des clés empilées
   000 : Pas de clé
   001 : Clé numéro 1
   010 : Clé numéro 2
   011 : Clé numéro 3
   100 : Clé numéro 4
   101 : Clé numéro 5
   110 : Clé numéro 6
   111 : Clé numéro 7
bits 13 à 14 : Emplacement de la clé
   00 : Pas de clé
   01 : Clé sur le poste local
   10 : Clé sur un serveur Novell
   11 : Clé sur un serveur compatible Netbios
bit 15 : Réservé

La fonction de cfgFun est décrite quant à elle ci-après :

CfgFun est une valeur sur 16 bits qui permet de connaître la position de la clé, ou de demander un login sur une clé particulière. La signification des bits est la suivante :
bits 0 à 7 : réservés
bit 7 : Indicateur de sortie des données (Ack ou PE)
bits 8 et 9 : Adresse du port parallèle ou numéro de serveur
   Pour une clé en local les valeurs sont :
      00 : Pas de clé
      01 : 03bch
      10 : 0378h
      11 : 0278h
   Pour une clé en réseau
      00 : Serveur numéro 0
      01 : Serveur numéro 1
      10 : Serveur numéro 2
      11 : Serveur numéro 3
bits 10 à 12 : Numéro de la clé pour des clés empilées
   000 : Pas de clé
   001 : Clé numéro 1
   010 : Clé numéro 2
   011 : Clé numéro 3
   100 : Clé numéro 4
   101 : Clé numéro 5
   110 : Clé numéro 6
   111 : Clé numéro 7
bits 13 à 14 : Emplacement de la clé
   00 : Pas de clé
   01 : Clé sur le poste local
   10 : Clé sur un serveur Novell
   11 : Clé sur un serveur compatible Netbios
bit 15 : Réservé

CfgFun peut-être utilisé pour faire un Login sur une clé particulière. Il faut pour cela positionner les bits en fonction de la recherche. On peut faire une recherche en précisant indépendamment chaque groupe de bits.

On sélectionne alors l'emplacement de la clé (Bits 13 et 14) en spécifiant le type de serveur recherché ou si c'est une clé en local qui est recherchée

Puis on sélectionne le numéro du serveur ou le port parallèle par les bits 8 et 9.

Enfin on sélectionne le numéro de la clé par les bits 10 à 12.

Par exemple pour faire un login uniquement sur la clé numéro 3 du serveur 2 de type Novell, la valeur de cfgFun sera : 0 10 011 10 0000 0000, soit 04E00h.

Lors du login il faudra mettre dans varl CfgFun + 2 pour que le login ne se fasse que sur la clé désirée.

Si le cfgFun n'est pas utilisé lors du Login, cnrm recherche la première clé valide dont le nombre de connections n'est pas épuisé, sur l'ensemble du réseau dans l'ordre :
Local
Novell serveur 0 à serveur 3
Netbios serveur 0 à serveur 3

L'ordre de recherche sur les serveur peut ne pas être respecté pour augmenter l'efficacité de la recherche, cependant cnrm commence toujours par une recherche en local.

On va maintenant décrire plus avant, à titre d'exemple les trois premières fonctionnalités de la fonction cnrm.

| **Fonction 00 *: Test de présence de la clé en local*** | |
|---|---|
| **Public** | **Non** |
| **Système** | **Non** |
| **Lecture** | **Non** |
| **Ecriture** | **Non** |
| **Ecriture une fois** | **Non** |
| **Mot de passe** | **Oui, si déjà initialisé** |
| **Accès SSII** | **Fonction 64** |
| **Protection** | **Non** |

La fonction 0 permet de savoir si une clé du développeur est présente. Toutes les clés ont un code attribué par le fabricant de clés à chaque développeur. Elles seront reconnues quelque soit le contenu des différents registres.

| **Contenu des variables** | | |
|---|---|---|
| | **Avant**_{**=**}**appel** | **Après**_{**=**}**appel** |
| **Var1** | 0 + CfgFun | Vrai |
| **Var2** | Code0 | cfgKey |
| **Var3** | Code1 | cfgFun |
| **Var4** | Clé0 ou 0 si Clé0 pas initialisé | 0 |
| **Var5** | 0 | Durée d'exécution de la fonction |
| **Var6** | 0 ou unité de temps ou Vrai | Temps de début d'exécution de la fonction |
| **Var7** | 0 | Version du logiciel ou Date du logiciel |
| **Var8** | 0 | Adresse du port parallèle |

### Avant appel : Initialisation des variables

Les valeurs entre [ ] sont optionnelles.
- Var1 :: 0 [+ cfgFun] - Numéro de fonction. Ajouter cfgFun pour une clé locale afin que le test soit plus rapide.
- Var2 :: Code0 - Poids forts du code éditeur fourni par le vendeur clé
- Var3 :: Code1 - Poids faibles du code éditeur fourni par le vendeur clé
- Var4 :: 0 ou mot de passe - Si le mot de passe n'est pas initialisé il faut utiliser 0, sinon il faut utiliser le mot de passe.
- Var5 :: 0
- Var6 :: 1 ou 2 ou 3 ou 4 ou Vrai : Avec la valeur Vrai on demande de renvoyer la date dans var7. 1 permet de demander une valeur de durée d'exécution en microsecondes, 2 permet d'avoir la durée en millisecondes, 3 permet d'avoir la durée en ticks d'horloge (55 ms), et 4 permet d'avoir une durée en secondes. Pour toute autre valeur la fonction renvoie un temps en microsecondes dans Var6 et la version du logiciel dans Var7.
- Var7 :: 0 - Réservée
- Var8 :: 0 - Réservée

### Après appel : Contenu des variables si la clé est présente

- Var1 :: Vrai si la clé est présente, sinon valeur aléatoire.
- Var2 :: cfgKey - Cette valeur donne des informations sur l'emplacement et le type de clé.
- Var3 :: cfgFun - Cette valeur donne des informations sur l'emplacement et le type de clé.
- Var4 :: Toujours 0
- Var5 :: Durée d'exécution de l'appel de la fonction. Ce temps dépend de l'unité précisée dans var4, et ne constitue qu'une valeur approchée. Il est possible d'obtenir les valeurs exactes de la manière suivante :
Si le temps est exprimé en micro secondes, diviser cette valeur par 1,193180
Si le temps est exprimé en millisecondes, diviser cette valeur par 1,193180
Si le temps est exprimé en Ticks horloges, diviser la valeur par 18,20648193 pour obtenir le temps en secondes.
Le temps en seconde est celui de l'horloge interne.

Mais il convient ici de noter qu'en mode protégé 32 bits (WINDOWS 32 bits, DOS EXTENDERS 32 bits), le temps n'est pas retourné.
- Var6 :: Temps de début d'exécution de la fonction. Le temps est exprimé dans l'unité spécifiée par Var4

Ici encore, en mode protégé 32 bits (WINDOWS 32 bits, DOS EXTENDERS 32 bits), le temps n'est pas retourné
- Var7 :: Version du logiciel ou date compactée. Si avant appel var6 contenait Vrai, alors Var7 contient la date au format compacté :

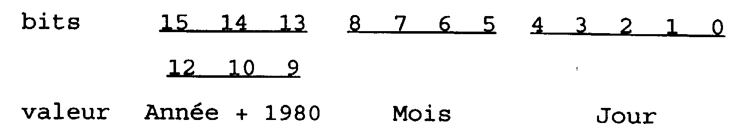

Dans les autres cas var7 contient la version du logiciel avec deux décimales. Exemple: 100 correspond à la version 1.00
- Var8 :: Adresse du port parallèle sur lequel se trouve la clé.

| **Fonction 01 *: Initialisation du mot de passe (local uniquement)*** | |
|---|---|
| **Public** | **Non** |
| **Système** | **Oui** |
| **Lecture** | **Non** |
| **Ecriture** | **Non** |
| **Ecriture une fois** | **Oui** |
| **Mot de passe** | **Oui, pour l'initialiser** |
| **Accès SSII** | **Fonction 65** |
| **Protection** | **Non** |

A la première commande d'un développeur, le fabricant de clés attribue par exemple deux codes : Code 0 et Code 1. Un troisième code est disponible pour une initialisation par le développeur. Cependant, pour une meilleure gestion des clés du développeur, le fabricant peut éventuellement aussi l'initialiser. Dans le mode décrit ici le mot de passe ne sera écrit qu'une seule fois et il ne pourra être ni lu, ni modifié. Si le développeur tente de le réinitialiser, Varl contiendra une valeur différente de Vrai lors de l'appel. En l'espèce il est alors conseillé d'utiliser toujours le même mot de passe après l'initialisation. Si le mot de passe est présent, il sera obligatoire pour accéder à toutes les fonctions.

| **Contenu des variables** | | |
|---|---|---|
| | **Avant**_{**=**}**appel** | **Après appel** |
| | | |
| **Var1** | 01 + CfgFun | Vrai |
| **Var2** | Code0 | cfgKey |
| **Var3** | Code1 | cfgFun |
| **Var4** | Clé0, mot de pass à initialiser | 0 |
| **Var5** | 0 | Réservée |
| **Var6** | 0 | Réservée |
| **Var7** | 0 | Valeur du mot de passe écrit dans la clé |
| **Var8** | 0 | Adresse du port parallèle |

### Avant appel : Initialisation des variables

Les valeurs entre [ ] sont optionnelles.
- Var1 :: 01 [+ cfgFun] - Numéro de fonction. Ajouter cfgFun pour sélectionner une clé locale particulière.
- Var2 :: Code0 - Poids forts du code éditeur fourni par le fabricant
- Var3 :: Code1 - Poids faibles du code éditeur fourni par le fabricant
- Var4 :: Clé0 = mot de passe à initialiser toujours différent de 0
- Var5 :: 0
- Var6 :: 0 - Réservée
- Var7 :: 0 - Réservée
- Var8 :: 0 - Réservée

### Apres appel : Contenu des variables si la clé est présente et clé0 non initialisée

- Var1 :: Vrai si la clé est présente et a pu être initialisée.
- Var2 :: cfgKey - Cette valeur donne des informations sur l'emplacement et le type de clé.
- Var3 :: cfgFun - Cette valeur donne des informations sur l'emplacement et le type de clé.
- Var4 :: 0
- Var5 :: Réservée
- Var6 :: Réservée
- Var7 :: Contient la valeur du mot de passe écrit dans la clé à condition que ce soit la première initialisation de celle-ci. Si la clé est absente ou déjà initialisée, une valeur quelconque s'affichera.
- Var8 :: Adresse du port parallèle sur lequel se trouve la clé.

| **Fonction 02 : *Login clé*** | |
|---|---|
| **Public** | **Non** |
| **Système** | **Oui** |
| **Lecture** | **Oui** |
| **Ecriture** | **Non** |
| **Ecriture une fois** | **Non** |
| **Mot de passe** | **Oui** |
| **Accès SSII** | **Fonction 66** |
| **Protection** | **Oui** |

Cette fonction permet à une application de s'attacher à une clé avec comme objectif la garantie que celle-ci soit liée à la bonne clé lorsqu'il y en a plusieurs. Le login permet aussi d'établir le canal avec le serveur de clé en environnement réseau. Habituellement, une application qui utilise le login est prévue pour fonctionner dans tous les cas possibles:
- une ou plusieurs clés en local
- une ou plusieurs clés en réseau
- une clé pour plusieurs applicatifs
- plusieurs applications sur des clés identiques ( même éditeur )

Le login est un point de passage obligatoire pour pouvoir exécuter les fonctions de numéro supérieur à 2.

Il est possible de faire soit un login général (var6 = var7 = var8 = 0 à l'appel), soit un login sur un registre (var6 = Vrai, Var7 = Numéro du registre et var7 = valeur que doit contenir le registre). Le nombre de connexion au serveur de clé sera toujours compté par machine, donc une machine peut faire autant de login quelle le souhaite, en ne consommant qu'une seule connexion.

Par la suite, le login général est considéré comme un login sur le registre numéro -1, pour une valeur indifférente : Il s'agit donc aussi d'un login registre.

| **Contenu des variables** | | |
|---|---|---|
| | **Avant appel** | **Après appel** |
| | | |
| **Var1** | 02 + CfgFun | Vrai |
| **Var2** | Code0 | cfgKey |
| **Var3** | Code1 | cfgFun |
| **Var4** | Clé0 | cfgLog ou 0 en cas d'erreur mémoire |
| **Var5** | 0 | Nombre de connexions encore disponible (pour la clé logguée) |
| **Var6** | Vrai | Nombre de connexions déjà installées (pour la clé logguée) |
| **Var7** | Valeur du registre (code application) | Nombre de connexions maximum autorisées (pour la clé logguée) |
| **Var8** | Adresse du registre | Adresse du port parallèle |

### Avant appel : Initialisation des variables

Les valeurs entre [ ] sont optionnelles.
- Var1 :: 02 [+ cfgFun] - Numéro de fonction. Ajouter cfgFun pour sélectionner une clé particulière.
- Var2 :: Code0 - Poids forts du code éditeur fourni par ACTIKEY
- Var3 :: Code1 - Poids faibles du code éditeur fourni par ACTIKEY
- Var4 :: Clé0 mot de passe
- Var5 :: 0
- Var6 :: 0 ou Vrai pour un login sur un registre
- Var7 :: Valeur du registre (code application) si Var6 = Vrai
- Var8 :: Adresse du registre si Var6 = Vrai

### Après appel : Contenu des variables si la clé est présente et le login s'est bien passé

- Var1 :: Vrai si la clé est présente, sinon valeur aléatoire. Une valeur de zero indique une erreur de login dont le code d'erreur se trouve dans var8. Ce code d'erreur correspond à celui renvoyé par le dernier serveur rencontré.
0 : Erreur d'allocation mémoire
1 : Echec de l'initialisation des API réseau : Pas de driver réseau
2 : Echec de connexion avec les API réseau : Erreur de fonctionnement du réseau
3 : Aucun serveur de clé n'a été trouvé
4 : Erreur de dialogue avec le serveur de clé
5 : Accès refusé car utilisateur non loggué
6 : Accès refusé car nombre maximum de connexion atteint
10: IPX non installé
11: Impossible d'ouvrir un socket
254 : clé absente
255 : Erreur inattendue
- Var2 :: cfgKey - Cette valeur donne des informations sur l'emplacement et le type de clé.
- Var3 :: cfgFun - Cette valeur donne des informations sur l'emplacement et le type de clé.
- Var4 :: cfgLog : Handle de login à utiliser dans tous les appels suivants
- Var5 :: Nombre de connexions encore disponibles si le réseau est connecté
- Var6 :: Nombre de connexions déjà installées si le réseau est connecté
- Var7 :: Nombre de connexions maximum autorisées
- Var8 :: Adresse du port parallèle sur lequel se trouve la clé.

### Comment se protéger avec la fonction 02

Cette fonction permet et garantit l'association unique entre une application et une clé, y compris dans le cadre des réseaux (pour les clés réseaux) En règle générale, un registre est défini par application, avec à l'intérieur, un code application qui sera le numéro de version de l'application. Le logiciel fait alors un login qui trouvera la clé qui correspond à l'application et à sa version, et ce, en monoposte ou en réseau, quelque soit le nombre de clés présentes. Ainsi, une même clé peut être programmée pour fonctionner sur plusieurs applicatifs.

En réseau, il est possible de protéger jusqu'à 1024 utilisateurs avec une seule clé, en l'installant sur le serveur pour NOVELL ou sur une station pour NOVELL ou NETBIOS.
- Var1 :: Sa valeur doit toujours être égale à Vrai. Si vous avez une autre valeur, soit la clé est absente, soit le login a échoué
- Var2 :: Ne pas utiliser pour se protéger.
- Var3 :: Ne pas utiliser pour se protéger.
- Var4 :: cfgLog : Handle de login. Il faut conserver cette valeur de var4 pour les appels aux autres fonction de numéro supérieur à 2. Chaque login renvoie un cfgLog différent, et il faut faire autant de logout que de login pour libérer la connection des clés en réseau. Si var4 contient un 0 après appel, c'est que le login a échoué, et aucune fonction suivante ne pourra aboutir.
- Var5 :: Nombre d'utilisateurs disponibles pour la connexion
- Var6 :: Nombre d'utilisateurs connectés au moment de l'appel
- Var7 :: Nombre d'utilisateurs maximum autorisés
- Var8 :: Adresse du port parallèle. Les constructeurs implémentent les ports parallèles aux adresses 0378h, 0278h et 3BCh. Si vous obtenez une valeur différente, c'est sans doute qu'une routine de remplacement est installée, auquel cas il vaut mieux quitter le programme. Il est aussi possible que la machine ne possède pas un port parallèle non compatible. Dans ce dernier cas la clé n'est pas utilisable.
Voir la fonction 47 pour connaitre le nombre de login sur un registre par machine, et le nombre de login sur un registre pour l'ensemble du réseau.

Les autres fonctions 03, 04, etc. sont définies de façon à obtenir les résultats recherchés.

Leur programmation s'effectue de façon connue en elle-même par l'homme du métier, de façon similaire aux trois fonctions précisées ci-dessus.

Dans des modes de réalisation avantageux, et afin de répondre à des cas de figure plus nombreux, la fonction cnrm est par ailleurs complétée par d'autres fonctions.

Rappelons que dans toutes les déclaration ci-dessous, et pour une plate-forme Windows (16 ou 32 bits) il faut qualifier les fonctions de WINAPI.

Il est ainsi prévu les modes suivants :
**a - Fonction cnrm avec passage des paramètres par valeur**
   **Modèle** entier cnrm(valeur var1, valeur var2, valeur var3, valeur var4, valeur var5, valeur var6, valeur var7, valeur var8)
   **Déclaration en C** int cnrm(int var1, int var2, int var3, int var4, int var5, int var6, int var7, int var8);
   **Déclaration en Pascal** Function cnrm(var1, var2, var3, var4, var5, var6, var7, var8 : integer) : integer;

   On remarque que le nom de la fonction est le même que pour un passage par référence. La seule différence provient du fait que dans le premier cas, ce sont des références qui sont transmises à la fonction, tandis que dans le second cas ce sont des valeurs qui sont transmises à la fonction.
   La définition des arguments est quant à elle similaire à celle déjà décrite.
   Par contre, pour obtenir le contenu des variables après appel, on utilisera la fonction cnrmvar décrite ci-dessous.
   Il est par ailleurs tout à fait possible de mélanger les types d'appel dans un même programme, par exemple le login peut se faire par valeur, et la lecture d'un registre peut se faire par référence.
**b - Fonction cnrmvar**
   Cnrmvar est une fonction qui permet de retrouver les paramètres après appel du cnrm pour le dernier appel si le login a été réussi.
   Il est principalement utilisé conjointement avec l'appel de cnrm par valeur, mais peut aussi être appelé dans le cas d'appels par référence : dans ce cas cela permet de mémoriser l'état des valeur en retour jusqu'au prochain appel de cnrm.
   **Modèle** entier cnrmvar(int cfgLog, int numVar)
   **Déclaration en C** int cnrmvar(int cfgLog, int numVar);
   **Déclaration en Pascal** Function cnrmvar(cfgLog, numVar : integer) : integer;
      cfgLog : Valeur retournée lors du login
      numVar : 1 à 8 : demande de renvoyer varl à var8 respectivement
         9 : Demande de renvoyer le code d'erreur du dernier appel au cnrm
         10 à 13 : Demande de renvoyer le code d'erreur reçu des serveurs de clé de type NOVELL respectivement de numéro de serveur 0 à 3
         20 à 23 : Demande de renvoyer le code d'erreur reçu des serveurs de clé de type NETBIOS respectivement de numéro de serveur 0 à 3

   Pour toutes les autres valeur de numVar, cnrmvar renvoie cfgLog
   Un exemple de fonctionnement est donné ci-après :
   **exemple :** 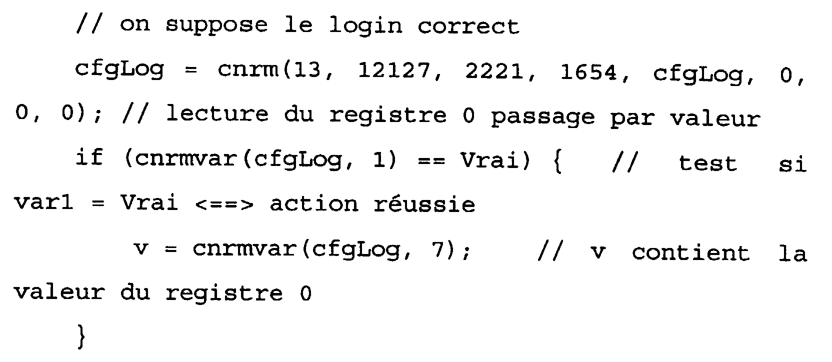
**c - Fonction cnrmcb : définition d'un appel en retour**
   L'appel en retour (callBack) est une fonction qui sera appelée par cnrm lors des appels suivants le placement par cnrmcb.
   Son intérêt réside dans la possibilité de savoir quelle opération effectue cnrm, d'arrêter l'exécution de cnrm prématurément, mais aussi d'améliorer la protection en permettant d'appeler indirectement des fonctions importantes du logiciel application protégé pendant l'exécution de cnrm. Cette fonction augmente considérablement la protection des programmes utilisant cnrm sous forme de librairie dynamique (DLL), si elle définit un appel en retour d'une fonction critique de l'application, comme par exemple l'initialisation de données sensibles dont une des composantes est stockée dans la clé.
   L'appel en retour ne sera fait que pour les actions de numéro > 2, et seulement si le login est réussi.
   On a :
   **Modèle** entier cnrmcb(int cfgLog, référence cb, entier long non signé Objet)
   **Déclaration en C** int cnrmcb(int cfgLog, callBack *cb, unsigned long Objet);
   **Déclaration en Pascal**
      Function cnrmcb(cfgLog : Integer; cb : _callBack; Objet : longInt): integer; far; external;
      cfgLog : valeur reçue lors du login
      cb : Adresse de la fonction en retour
      Objet : Une valeur qui sera toujours transmise à la fonction appelée en retour
      cnrmcb renvoie toujours cfgLog, donc si cfgLog est invalide c'est la valeur 0

   La forme générale de la fonction appelée en retour est par ailleurs la suivante :
   **Modèle** int callBack(unsigned long Objet, int E, int SE, int cfgLog) ;
   **Déclaration en C** typedef int _callBack(unsigned long Object, int E, int SE, int cfgLog) ;
   **Déclaration en Pascal**
      type _callBack = Function(Objet : longInt; E : integer; SE : integer; cfgLog : integer): integer;
      Si callBack renvoie la valeur 0 alors l'exécution de cnrm est arrêtée dans l'état courant, sinon l'exécution de cnrm continue.

   "Objet" est un entier non signé qui est laissé à disposition : en général on y met un pointeur this d'un objet C++. Objet à été donné lors du placement du callBack
   E est la valeur de l'état interne de cnrm au moment de l'appel de callback
   E = 0 = DEMARRAGE : début de cnrm
   E = 1 = LOCAL : Avant appel de cnrm en local (test local)
   E = 2 = NOVELL : Avant appel de cnrm sur NOVELL
   E = 3 = NETBIOS : Avant appel de cnrm sur NETBIOS
   E = 255 = FIN : Avant de quitter cnrm

   L'ordre des appels n'est garanti que pour E = 0 et E = 255. Les autres états peuvent être donnés plusieurs fois dans un ordre quelconque.
   SE donne des informations de sous état qui dépendent de E.
   si E = 0 ou E = 255, SE vaut toujours 0
   si E = 1, SE peut prendre les valeurs de 1 à 99
   si E = 2, SE peut prendre les valeurs de 1 à 99
   si E = 3, SE peut prendre les valeurs de 1 à 99

   CfgLog permet de retrouver l'état des variables passés en paramètre lors de l'appel au cnrm pour toutes les valeurs de E < 255, ou les valeurs après appel pour toutes les valeurs de E >= 255.
   La fonction callBack ne doit pas appeler cnrm sauf si E = 255, mais elle peut appeler cnrmcb pour placer une nouvelle fonction en retour qui sera appelée pour l'état suivant, ou appeler cnrmccb pour effacer l'appel en retour. Si la fonction callBack appelle cnrm pour E <> 255, il ne se passera rien.
   Par contre si E = 255, cnrm est appelé normalement, mais sans appel de la fonction en retour. Il n'y a donc aucune précaution à prendre dans les callBack pour éviter la récursion, car elle ne peut pas se produire.
**d - Fonction cnrmccb** : **effacement d'un appel en retour**
   L'appel en retour (callBack) est une fonction qui sera appelée par cnrm lors des appel suivants le placement par cnrmcb. Il est possible de supprimer cet appel en retour à n'importe quel moment, y compris dans une fonction callBack, à l'aide de cnrmccb
   **Modèle** entier cnrmccb(int cfgLog)
   **Déclaration en C** int cnrmccb(int cfgLog) ;
   **Déclaration en Pascal** Function cnrmccb(cfgLog : Integer): integer; far; external;
      cfgLog : Valeur reçue lors du login
      cnrmccb renvoie toujours cfgLog, donc si cfgLog est invalide c'est 0
**e - Fonction cnrmseg : renvoie le segment d'une variable (Environnement 16 bits uniquement)**
   La fonction cnrmseg renvoie le segment d'une variable de type far. Elle s'utilise en général avec les langages ne permettant pas de retrouver les segments et offset (exemple : VISUAL BASIC).
   **Modèle** int cnrmseg(void far *s) ; // avec s la variable dont il faut extraire le segment
   **Déclaration en C** int cnrmseg(char far *s);
   **Déclaration en Pascal** Function cnrmseg(p : pointer) : integer; far; external;
**f - Fonction cnrmoff : renvoie l'offset d'une variable (Environnement 16 bits uniquement)**
   La fonction cnrmoff renvoie le segment d'une variable de type far. Elle s'utilise en général avec les langages ne permettant pas de retrouver les segments et offsets (exemple : VISUAL BASIC).
   **Modèle** int cnrmoff(void far *s) ; // avec s la variable dont il faut extraire le segment
   **Déclaration en C** int cnrmoff(char far *s);
   **Déclaration en Pascal** Function cnrmoff(p : pointer) : integer; far; external;

   Que ce soit sous forme de librairie statique (.LIB ou .OBJ) ou sous forme de librairies dynamiques, les fonctions décrites ci-dessus sont toutes accessibles, (cnrmseg et cnrmoff n'ont cependant de sens que pour les environnements 16 bits).

On va maintenant décrire deux exemples de protections selon les modes de réalisation de l'invention plus particulièrement décrits ici.

Ces exemples sont donnés à titre indicatif, l'objectif des protections données ici étant d'être fiable en garantissant une dépendance de l'application au contenu de la clé, et une réelle exécution des interfaces logicielles d'accès à la clé.

Ce type de protection est particulièrement recommandé en cas d'utilisation de DLL.

Dans les modes décrits plus particulièrement ci-après, il est de plus fait appel à un outil de cryptage externe à appliquer sur le programme exécutable final.

Cet outil est le même pour les deux applications et est donné à titre d'exemple non limitatif.

Dans tous les cas, le développeur devra l'adapter en fonction de son cas d'espèce.

Les deux exemples reprennent une application de calcul de diamètre d'un cercle, de sa circonférence, du volume d'un cylindre basé sur le cercle et de poids dudit cylindre. A chaque fois on affiche le résultat.

Le premier exemple est en langage C, le source prévu ici étant en environnement 16 bits.

Le principe de la protection est ici de choisir quelques fonctions sensibles du logiciel à protéger, de masquer le point d'entrée de ces fonctions par un appel indirect, et de crypter la structure qui contient le point d'entrée desdites fonctions.

Ainsi, on garantit que la clé a bien été lue sinon le décryptage ne se fait pas, et dans ce cas les points d'entrée des fonctions ne sont pas valides.

Si un utilisateur normal ayant une licence ne met pas sa clé, il aura le message « clé absente » .

Si un pirate tente de remplacer la clé ou de supprimer le test de présence de la clé, le décryptage ne se fait pas, et dans ce cas les points d'entrée des fonctions ne sont pas valides.
Le cryptage est assuré par un programme externe après compilation et édition de liens. Il utilise la chaîne REPERE1 qui doit être unique pour trouver la zone à crypter et la longueur de ladite zone.

La chaîne REPERE1 a pour seul objet l'identification d'une section de données vue par le programme externe, celui-ci ne pouvant pas lire les sources du programme à protéger.

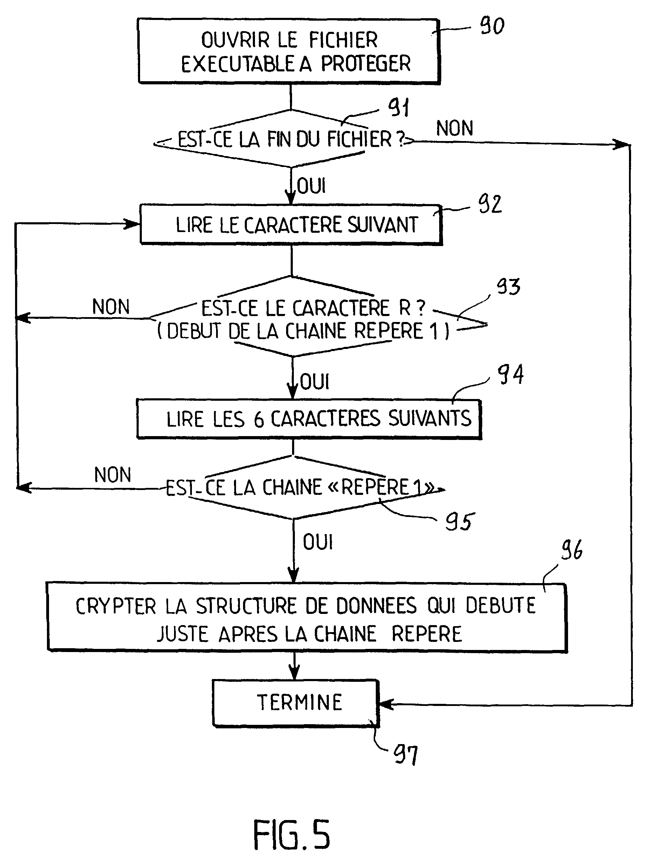

Un exemple de fonctionnement de ce programme de cryptage est précisé en référence à la figure 5.

Plus précisément le programme R1 comporte une première étape 90 dans laquelle le fichier exécutable à protéger est ouvert, puis un test 91 sur la fin du fichier.

Si le fichier n'est pas terminé la routine s'arrête (étape 97).

Si la fin du fichier est observée, une étape 92 de lecture du caractère suivant est entreprise, suivie par un test 93 de comparaison du caractère lu avec un caractère de référence R, qui est le caractère du début de la chaîne dite REPERE1.

Si ce n'est pas le bon caractère la lecture du caractère suivant est alors effectuée (retour à l'étape 92), sinon on lit (étape 94) les n caractères suivants, par exemple six.

Une étape test 95 est alors effectuée pour vérifier s'il s'agit de la chaîne dite REPERE1. Si cela n'est pas le cas, on revient à l'étape 92, si cela est le cas, l'étape 96 de cryptage de la structure de données est alors initiée juste après la chaîne REPERE1.

Une fois le cryptage effectué la routine concernée est arrêtée (étape 97).

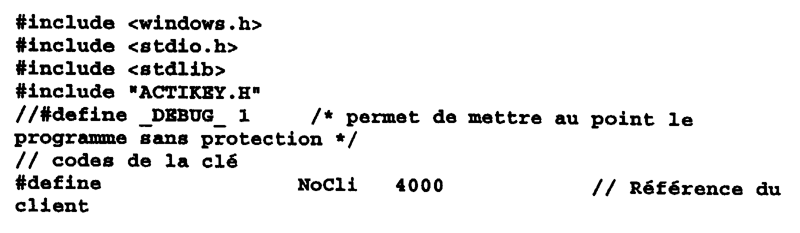

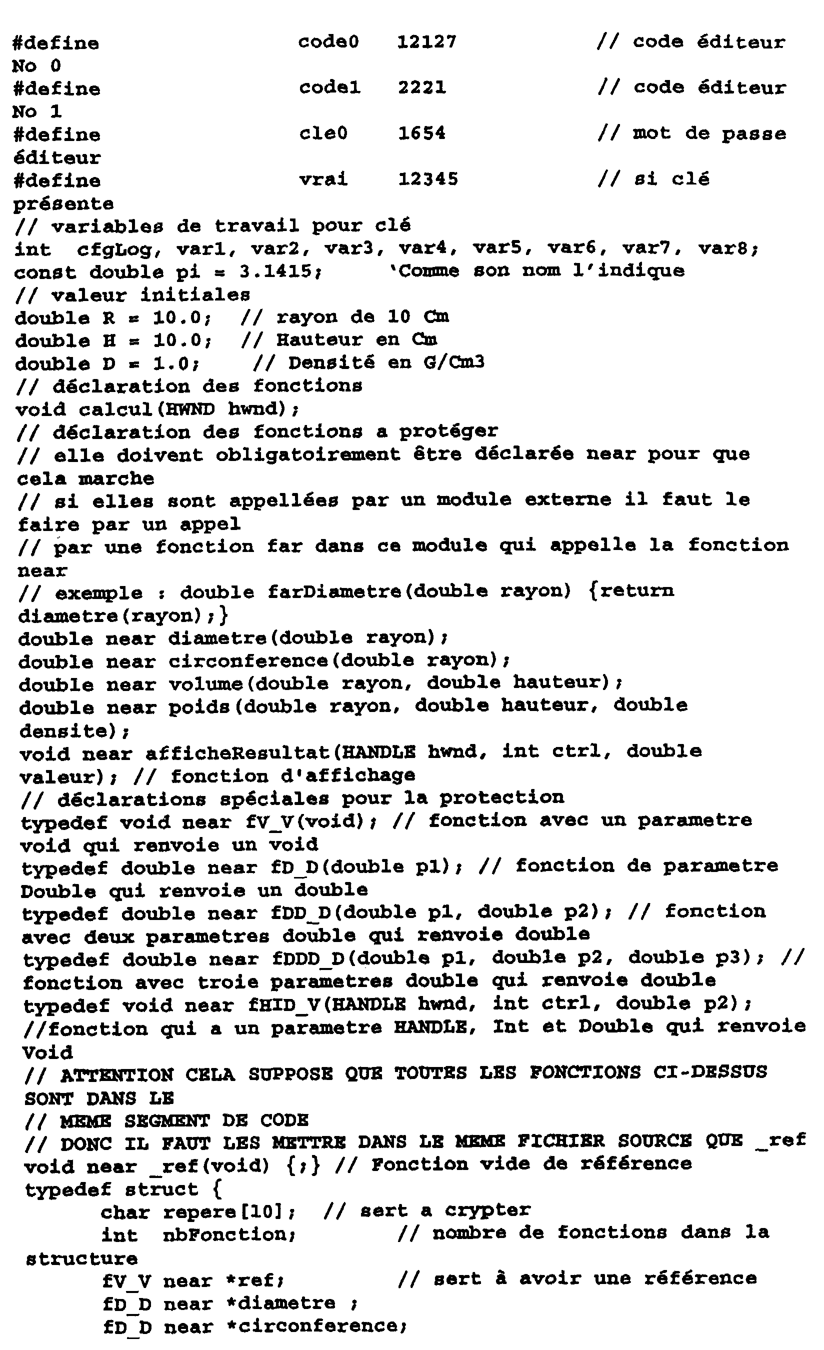

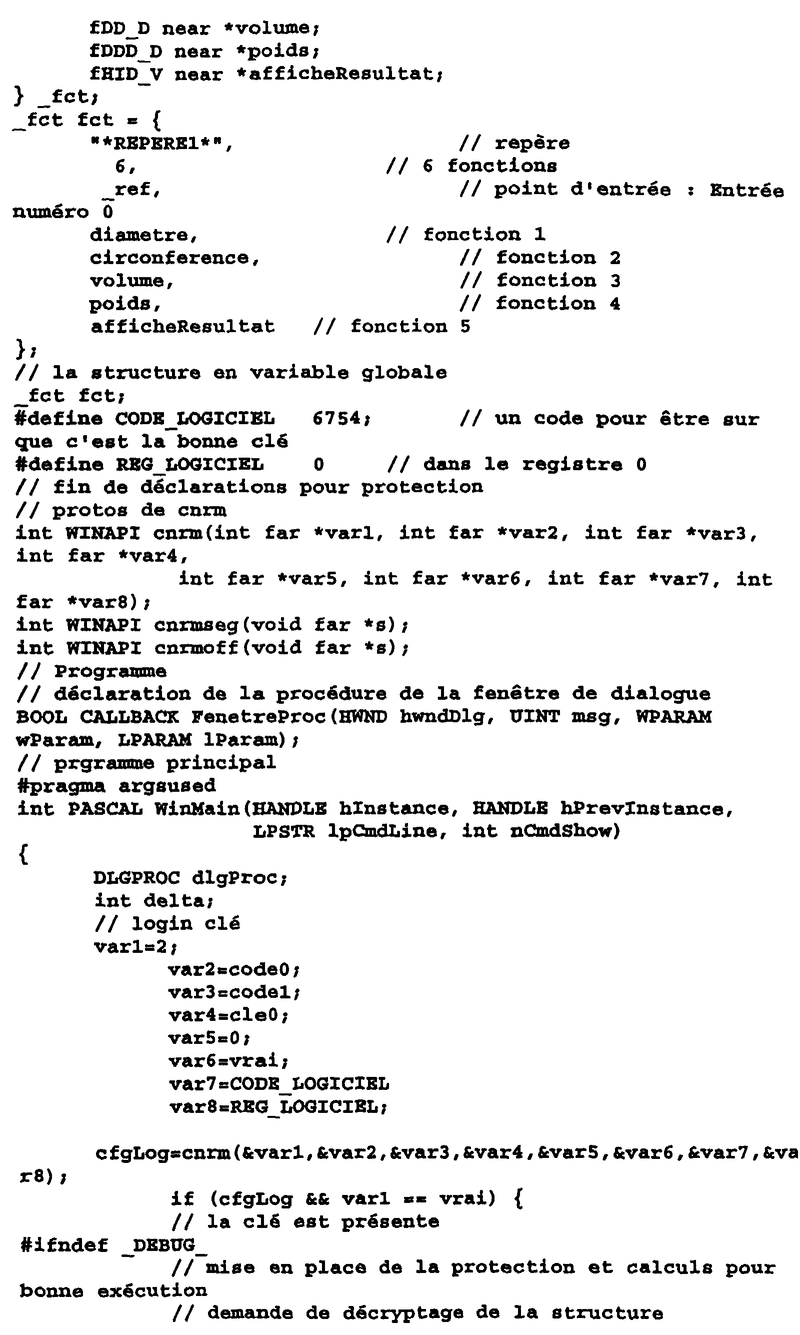

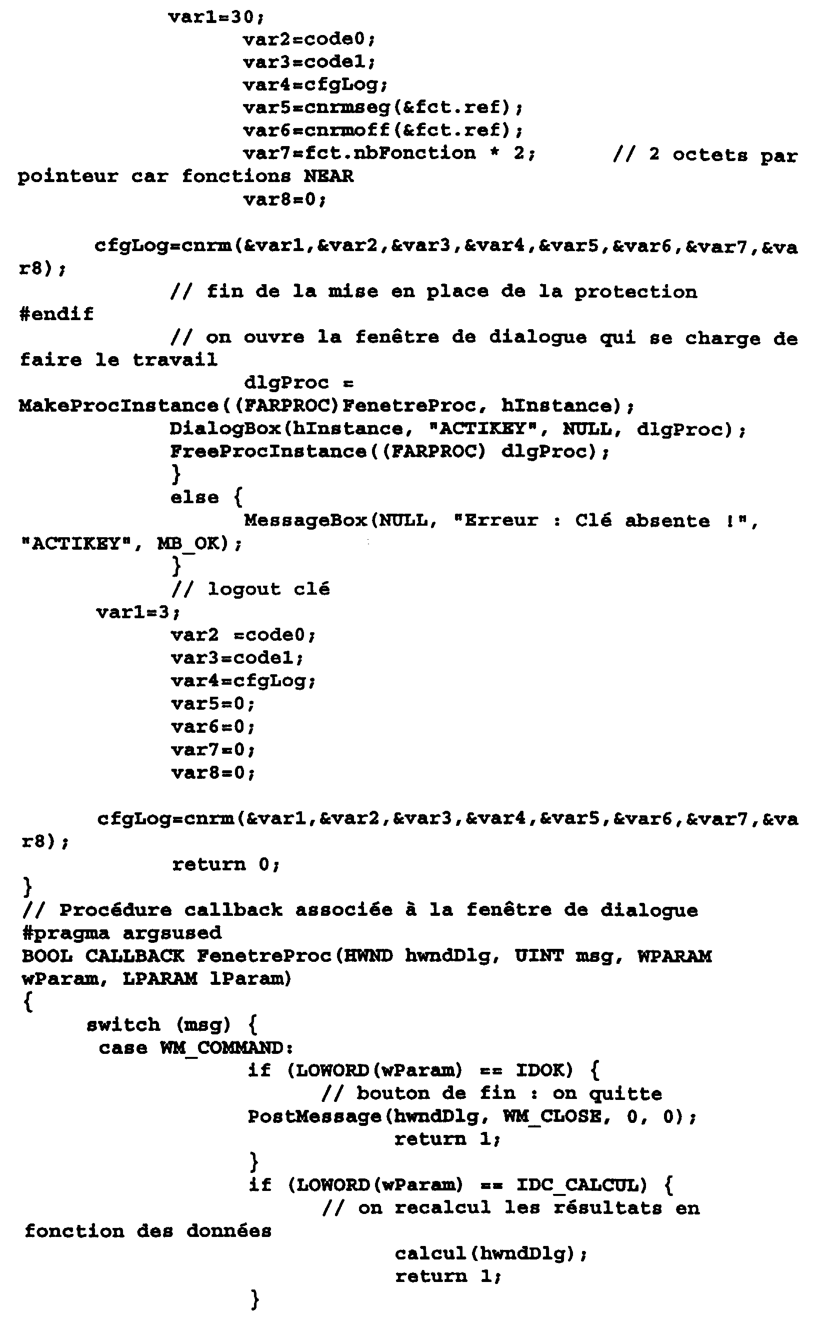

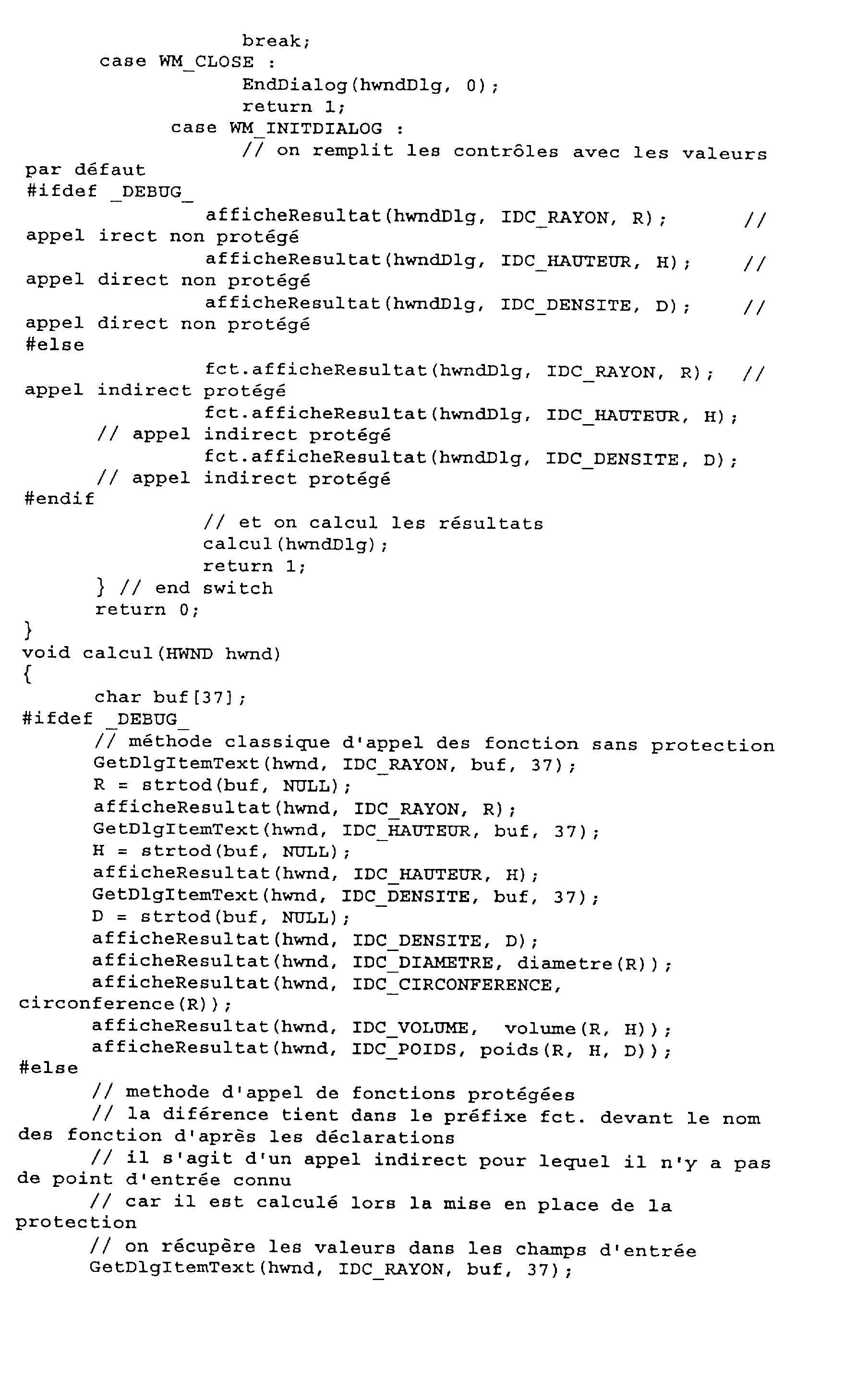

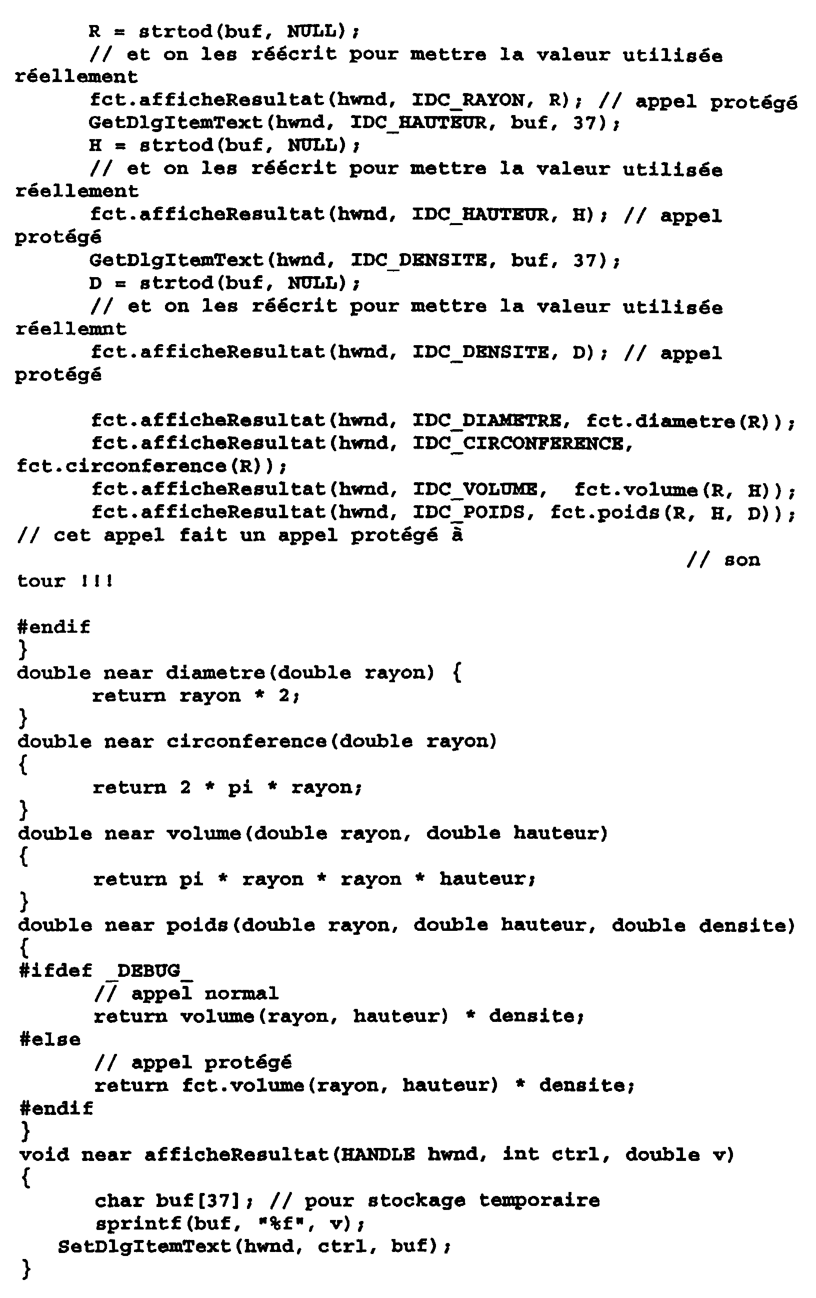

Le deuxième exemple est celui d'une application avec niveau de protection très élevé en Visual Basic.

Cette application fait appel à une DLL et ne permet pas l'utilisation des techniques possibles avec le C.

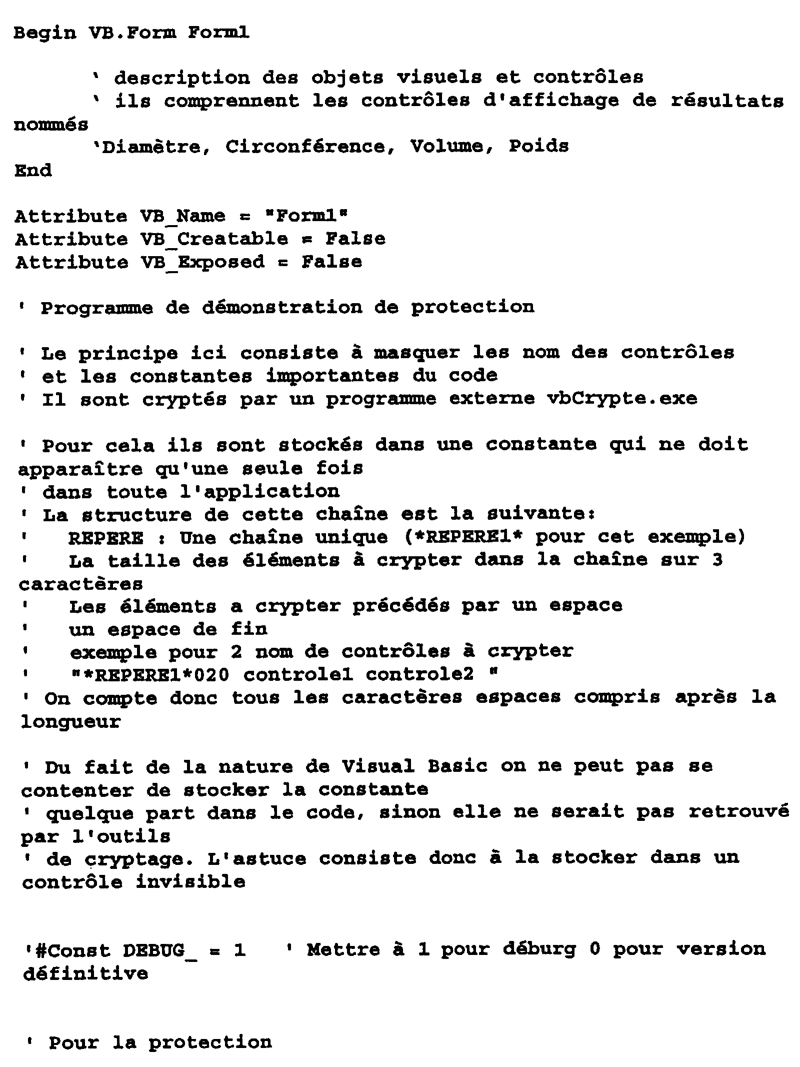

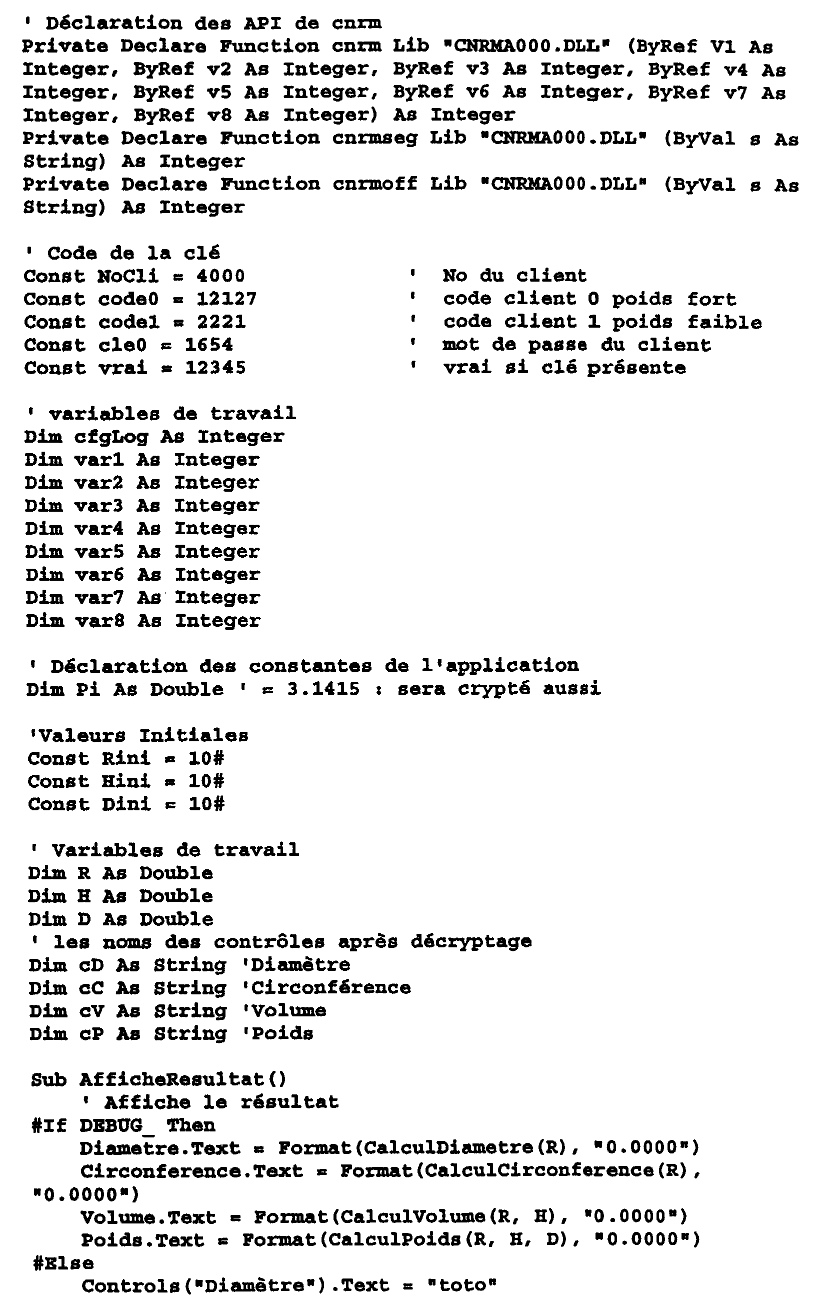

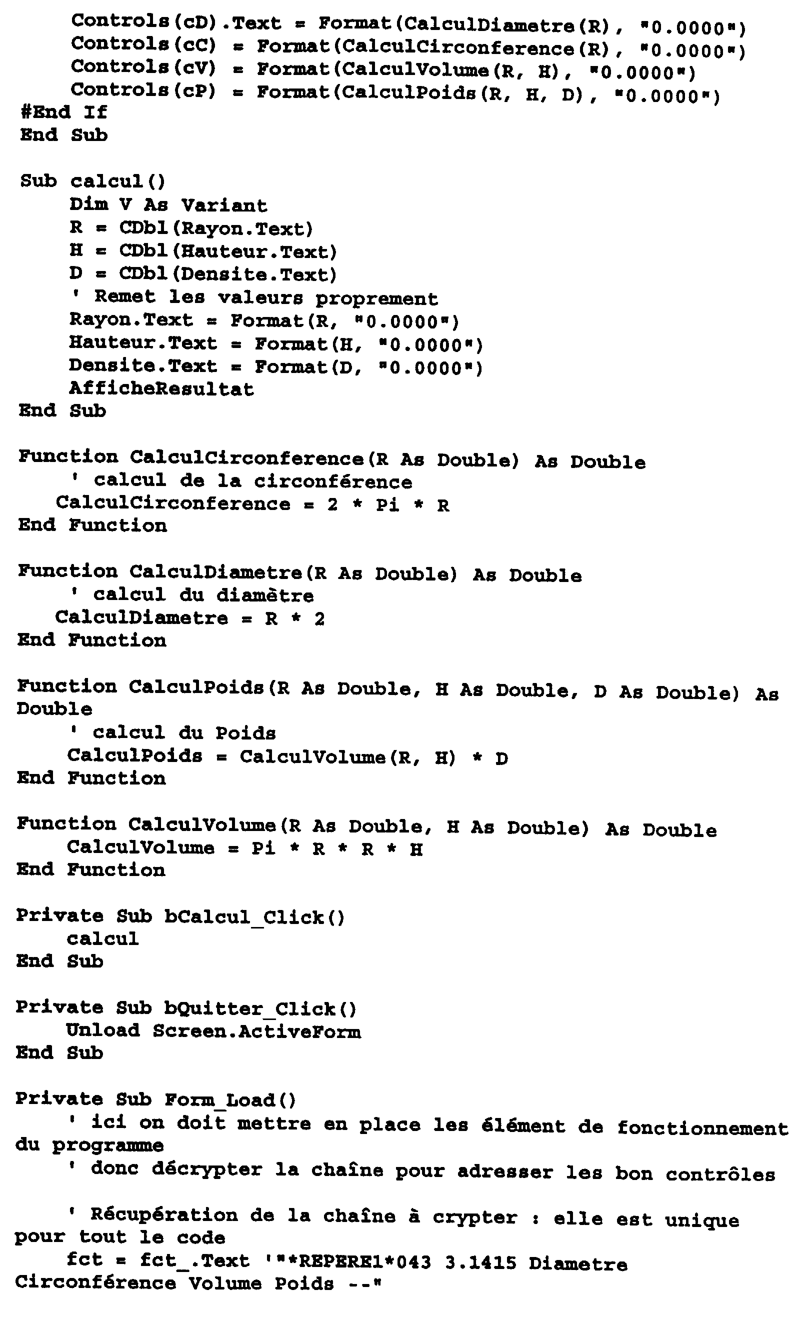

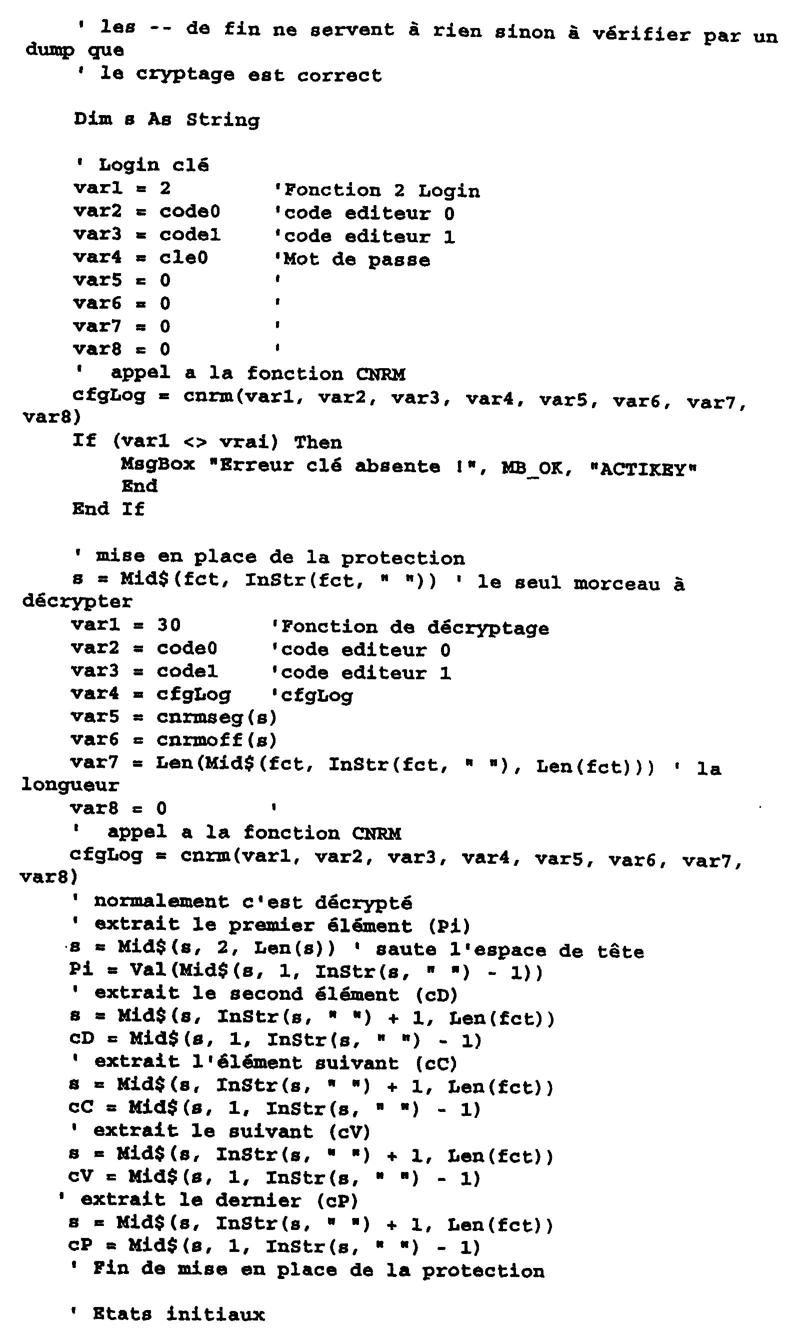

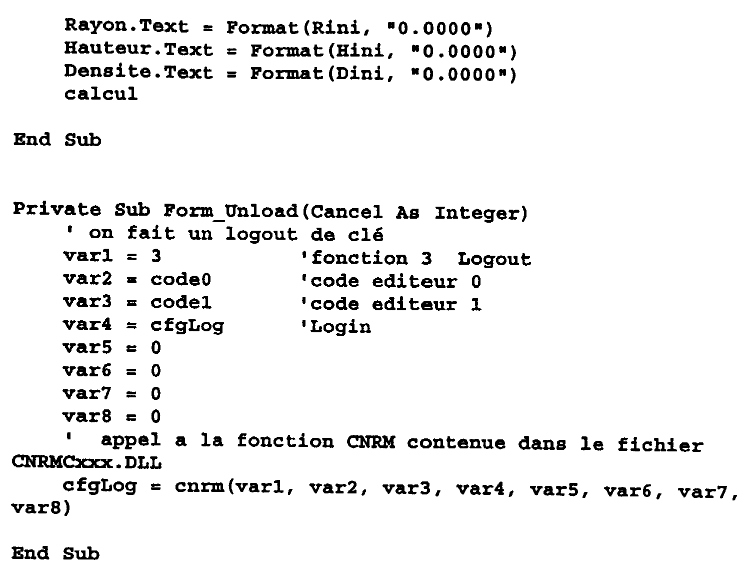

Comme il va de soi et comme il résulte d'ailleurs de ce qui précède, la présente invention ne se limite pas aux modes de réalisation plus particulièrement décrits, mais en embrasse au contraire toutes les variantes et notamment celles où d'autres méthodes de cryptage sont utilisées.

## Revendications

1. Procédé de contrôle de l'utilisation d'un logiciel développé sous une plate-forme déterminée, associé à un dispositif muni d'un circuit électronique à mémoire rémanente à lecture/écriture, connecté aux bornes d'un port parallèle entre un ordinateur et un appareil périphérique, dans lequel on traite dans le dispositif et/ou on renvoie à partir dudit dispositif des signaux à l'ordinateur en réponse à des signaux émis à partir de ce dernier, caractérisé en ce que
on écrit et on lit dans le circuit du dispositif en faisant appel à une fonction intégrée dans un fichier objet (.OBJ) ou un fichier de Librairie Dynamique (.DLL) préalablement inséré dans ledit logiciel, ladite fonction ayant la forme suivante :
résultat = cnmr(var1, var2, ... varn) avec n > 3
dans laquelle varl à varn correspondent à des valeurs particulières selon ce que l'on souhaite exécuter avec le dispositif et à au moins une valeur spécifique correspondant à un utilisateur déterminé,
ladite fonction étant agencée pour détecter automatiquement le type de plate-forme déterminée, et calculer le contexte d'exécution du logiciel en fonction de ladite plate-forme.

2. Procédé selon la revendication 1, caractérisé en ce que lors de la mise en oeuvre de la fonction de liaison (Login) entre le logiciel et le dispositif on identifie la clé et/ou sa position par l'intermédiaire d'une valeur spécifique (cfgFun ou cfgKey) donnée ou non par le logiciel et on mémorise cette valeur spécifique qu'on utilise ensuite comme constante lors du fonctionnement dudit logiciel.

3. Procédé selon l'une quelconque des revendications précédentes, caractérisé en ce que la fonction cnrm est agencée (fonction cnrmcb) pour rappeler au moins une fois le logiciel en cours de fonctionnement, pour vérifier que c'est bien le cnrm d'origine qui a été appelé.

4. Procédé selon l'une quelconque des revendications précédentes, caractérisé en ce que la plate-forme déterminée est une plate-forme Windows, ladite fonction cnrm étant agencée pour permettre de reconnaître automatiquement le type de passage de paramètres par référence ou par valeur mis en oeuvre dans le logiciel.

5. Procédé selon la revendication 4, caractérisé en ce que on ne met en place le contexte d'exécution qu'une seule fois, lors de la première mise en oeuvre de la fonction de liaison entre le logiciel et le dispositif (login d'entrée).

6. Procédé selon l'une quelconque des revendications précédentes, caractérisé en ce que n est égal à 8.

7. Procédé selon l'une quelconque des revendications précédentes, caractérisé en ce que le procédé comprend une méthode de protection dans laquelle on choisit au moins une fonction sensible du logiciel à protéger, on masque le point d'entrée de cette fonction par un appel indirect, et on crypte la structure qui contient le point d'entrée de ladite fonction.

8. Procédé selon l'une quelconque des revendications précédentes, caractérisé en ce que il comprend une méthode de protection dans laquelle on choisit au moins une fonction de contrôle ou une constante importante, et on crypte cette fonction ou cette constante.

9. Procédé selon l'une quelconque des revendications 7 et 8, caractérisé en ce que le cryptage est assuré par un programme externe après compilation et édition de liens.

10. Système de contrôle interactif de l'utilisation de logiciels caractérisé en ce qu'il comprend au moins un dispositif mettant en oeuvre le procédé selon l'une quelconque des revendications précédentes.
